# EUROPEAN PATENT SPECIFICATION

(11) **EP 2 798 465 B1**
(45) Date of publication and mention of the grant of the patent: **14.11.2018**
(21) Application number: 11878889.2
(22) Date of filing: 30.12.2011
(51) Int. Cl.: G06F 9/30

(54) **UNIQUE PACKED DATA ELEMENT IDENTIFICATION PROCESSORS, METHODS, SYSTEMS, AND INSTRUCTIONS**
PROZESSOREN ZUR IDENTIFIZIERUNG VON EINZELNEN VERPACKTEN DATENELEMENTEN, VERFAHREN, SYSTEME, UND ANWEISUNGEN
PROCESSEURS, PROCÉDÉS, SYSTÈMES ET INSTRUCTIONS D'IDENTIFICATION D'UN ÉLÉMENT UNIQUE DE DONNÉES CONDENSÉES

(43) Date of publication of application: 05.11.2014
(73) Proprietor: Intel Corporation, Santa Clara, CA 95054 (US)
(72) Inventor: PLOTNIKOV, Mikhail, Nizhny Novgorod, NIZ 603024 (RU); NARALKIN, Andrey, NIZ Nizhny Novgorod 603024 (RU); OULD-AHMED-VALL, Elmoustapha, Chandler, AZ 85226 (US); SHALNOV, Sergey, Nizhny Novgorod 603024 (RU)
(74) Representative: HGF Limited
(86) International application number: PCT/US2011/068251
(87) International publication number: WO 2013/101234

(56) References cited:
- WO-A1-2008/036945
- WO-A2-2009/120981
- US-A- 6 070 237
- US-A1- 2008 077 773
- US-A1- 2008 282 073
- US-A1- 2008 282 073
- US-B2- 7 752 181

## Description

### BACKGROUND

### Field

Embodiments relate to processors. In particular, embodiments relate to processors that are to identify unique packed data elements in packed data responsive to unique packed data element identification instructions.

### Background Information

Many processors have instruction set architectures that support both scalar operations and packed data or vector operations. Representatively, scalar operations include those operations (e.g., logical operations, arithmetic operations, etc.), which are performed on a single data element, or a single pair of corresponding data elements. By contrast, packed data operations, vector operations, or Single Instruction, Multiple Data (SIMD) operations, include those operations (e.g., logical 15 operations, arithmetic operations, etc.), which are performed on multiple data elements or multiple pairs of corresponding data elements, concurrently or in parallel.

A processor having a packed data or SIMD architecture may include parallel execution hardware, which is responsive to a packed data instruction, to perform the operations on the multiple data elements concurrently or in parallel. Multiple data
elements may be packed within a register, or other storage location, as packed data or vector data. The bits of the register or other storage location may be logically divided into a sequence of data elements. For example, a 256-bit wide packed data register may have four 64-bit wide data elements, eight 32-bit data elements, sixteen 16-bit data elements, etc. Each of the data elements may represent a separate individual
piece of data, which may be operated upon concurrently or in parallel. WO 2008/036945 A1 provides certain disclosures in the field of processing text strings.

### BRIEF DESCRIPTION OF THE SEVERAL VIEWS OF THE DRAWINGS

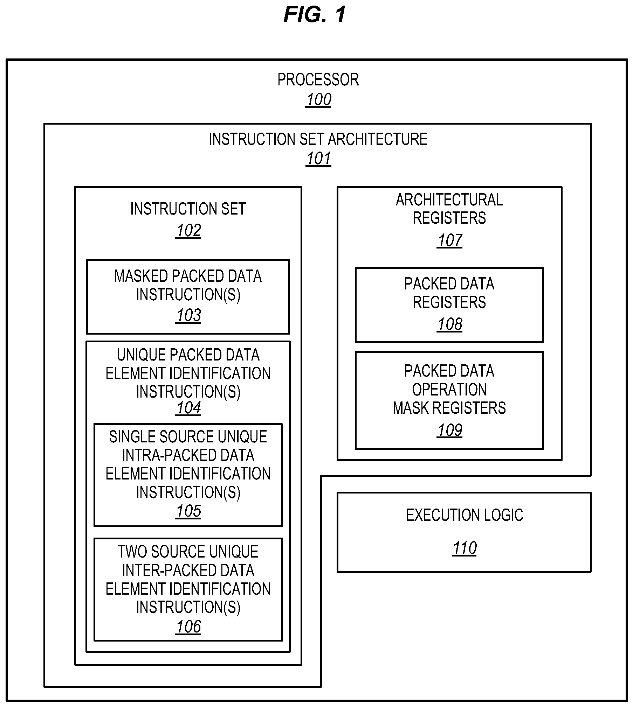

The invention may best be understood by referring to the following description and accompanying drawings that are used to illustrate embodiments. In the drawings: Figure 1 is
a block diagram of an example embodiment of a processor having an instruction set that includes one or more unique packed data element identification instructions.
Figure 2 is a block diagram of an example embodiment of an instruction processing apparatus having an execution unit that is operable to execute instructions including an example embodiment of a unique packed data element identification instruction.
Figure 3 is a block flow diagram of an example embodiment of a method of processing an example embodiment of a unique packed data element identification instruction.
Figure 4A is a block diagram illustrating an embodiment of a single source unique intra-packed data element identification operation.
Figure 4B is a block diagram illustrating an illustrative example embodiment of a single source unique intra-packed data element identification operation.
Figure 5 is a block flow diagram of an embodiment of a method of using a unique packed data element identification result.
Figure 6 is a block flow diagram of an example embodiment of a method of processing an example embodiment of a two source unique inter-packed data element identification instruction.
Figure 7A is a block diagram illustrating an embodiment of a two source unique inter-packed data element identification operation.
Figure 7B is a block diagram illustrating an illustrative example embodiment of a two source unique inter-packed data element identification operation.
Figure 8 is a block diagram illustrating several example embodiments of suitable packed data formats.
Figure 9 is a block diagram of an example embodiment of a suitable set of packed data registers.
Figure 10 is a block diagram of an example embodiment of a suitable set of packed data operation mask registers.
Figure 11 is a diagram illustrating an example embodiment of a packed data operation mask register and showing that the number of bits that are used may depend upon the packed data width and the data element width.
Figure 12 is a block diagram of an article of manufacture including a machine-readable storage medium storing one or more unique packed data element identification instructions.
Figure 13A is a block diagram illustrating a generic vector friendly instruction format and class A instruction templates thereof according to embodiments of the invention
Figure 13B is a block diagram illustrating the generic vector friendly instruction format and class B instruction templates thereof according to embodiments of the invention.
Figure 14 is a block diagram illustrating an exemplary specific vector friendly instruction format according to embodiments of the invention.
Figure 15 is a block diagram of a register architecture according to one embodiment of the invention.
Figure 16A is a block diagram illustrating both an exemplary in-order pipeline and an exemplary register renaming, out-of-order issue/execution pipeline according to embodiments of the invention.
Figure 16B is a block diagram illustrating both an exemplary embodiment of an in-order architecture core and an exemplary register renaming, out-of-order issue/execution architecture core to be included in a processor according to embodiments of the invention.
Figure 17A is a block diagram of a single processor core, along with its connection to the on-die interconnect network and with its local subset of the Level 2 (L2) cache, according to embodiments of the invention.
Figure 17B is an expanded view of part of the processor core in Figure 17A according to embodiments of the invention.
Figure 18 is a block diagram of a processor that may have more than one core, may have an integrated memory controller, and may have integrated graphics according to embodiments of the invention.
Figure 19 shown is a block diagram of a system in accordance with one embodiment of the present invention.
Figure 20 shown is a block diagram of a first more specific exemplary system in accordance with an embodiment of the present invention.
Figure 21 shown is a block diagram of a second more specific exemplary system in accordance with an embodiment of the present invention.
Figure 22 shown is a block diagram of a SoC in accordance with an embodiment of the present invention.
Figure 23 is a block diagram contrasting the use of a software instruction converter to convert binary instructions in a source instruction set to binary instructions in a target instruction set according to embodiments of the invention.

### DETAILED DESCRIPTION

Disclosed herein are unique packed data element identification instructions, processors to execute the unique packed data element identification instructions, methods performed by the processors when processing or executing the unique packed data element identification instructions, and systems incorporating one or more processors to process or execute the unique packed data element identification instructions. In the following description, numerous specific details are set forth (e.g., specific processor configurations, sequences of operations, instruction formats, data formats, microarchitectural details, etc.). However, embodiments may be practiced without these specific details. In other instances, well-known circuits, structures and techniques have not been shown in detail to avoid obscuring the understanding of the description.

Given that packed data operations are performed concurrently or in parallel, difficulties may arise in utilizing packed data operations when operations performed on some data elements in the packed data have data dependencies on operations performed on other data elements in the same packed data. One instance where such difficulties may arise is when utilizing gather and scatter instructions.

A gather instruction, for example, may help to construct an input packed data for a subsequent packed data instruction or operation by gathering or retrieving data values specified by indices of a data array. For example, if a data array "A" has 100 entries, a gather instruction of the form "gather A[15; 34; 66; 78]" may gather or retrieve data values in the 15th, 34th, 66th and 78th index positions of the array A. The gathered data values may be stored as packed data elements to be used as a source packed data by a packed data instruction or operation. A scatter instruction, for example, may effectively perform the reverse operation to that of the gather instruction. Specifically, a scatter instruction of the form "scatter A[15; 34; 66; 78]" may scatter or store values (e.g., data elements of a result packed data of a packed data instruction or operation) to the 15th, 34th, 66th and 78th index positions of the array A.
Accordingly, a gather, vector operation, scatter instruction sequence may have the form:
first packed data ← gather A[a; b; c; d];
second packed data ← packed data operation on first packed data;
scatter (A[a; b; c; d]; second packed data)
In this sequence, data elements are gathered or retrieved from the a, b, c and d index positions of the array A and the gathered data elements are stored into a first packed data. Then, a packed data operation is performed on the first packed data and a result is stored in a second packed data. Next, the data elements of the second packed data are scattered or stored in the a, b, c and d index positions of the array A.
Commonly, the set of index values or elements that are provided to the gather and/or scatter instructions may have data dependencies with one another. For example, an instruction sequence involving a data dependency may have the form:
first packed data ← gather A[a; b; c; a];
second packed data ← packed data operation on first packed data;
scatter (A[a; b; c; a]; second packed data)
In this sequence, the packed data operation on the leftmost A[a] value (i.e., A[**a**; b; c; a]) has a data dependency on the result of the packed data operation performed on the rightmost A[a] value (i.e., A[a; b; c; **a**]), according to one possible convention involving right to left ordering of data dependencies. In other words, the way the operations should be performed, to obtain the correct result reflecting the data dependencies, is to first perform the packed data operation on the rightmost A[a] and store a result (R) (i.e., operation(rightmost A[a]) → R), and then to perform the packed data operation on the result (i.e., operation(R)) to obtain the leftmost A[a]. If the data dependencies are not properly taken into consideration, incorrect results may be obtained. Specifically, in this example, if the data dependencies are not accounted for, the result of the packed data operation would be operation(leftmost (A[a])) rather than operation(R) which would be correct. Compilers may have difficulty vectorizing code having such data dependencies. It is implied that the data dependencies are not in the indexes themselves, but in related array or memory storage cell which the indexes target. Moreover, the packed data operation is done not over the indexes themselves, but over the data which is indicated by these indexes.

One use of the unique packed data element identification instructions disclosed herein is to help account for data dependencies in packed data and/or packed data operations. First, a description of how embodiments of these instructions may be used to identify unique data elements in packed data will be described. Then, further below, a description of how the identification of the unique data elements (i.e., the results of the unique packed data element identification instructions) may be used in some embodiments to inform program decisions or control program flow so that the data dependencies may be accounted for will be provided.

Figure 1 is a block diagram of an example embodiment of a processor 100 having an instruction set 102 that includes one or more unique packed data element identification instructions 104. The processor may be any of various complex instruction set computing (CISC) processors, various reduced instruction set computing (RISC) processors, various very long instruction word (VLIW) processors, various hybrids thereof, or other types of processors entirely. In some embodiments, the processor may be a general-purpose processor (e.g., a general-purpose microprocessor of the type used in desktop, laptop, and like computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers (e.g., microcontrollers), to name just a few examples.

The processor has an instruction set architecture (ISA) 101. The ISA represents a part of the architecture of the processor related to programming. The ISA commonly includes the native instructions, architectural registers, data types, addressing modes, memory architecture, interrupt and exception handling, and external input and output (I/O) of the processor. The ISA is distinguished from the microarchitecture, which generally represents the particular processor design techniques selected to implement the ISA. Processors with different microarchitectures may share a common ISA.

The ISA includes architecturally-visible registers (e.g., an architectural register file) 107. The architectural registers generally represent on-die processor storage locations. The architectural registers may also be referred to herein simply as registers. Unless otherwise specified or apparent, the phrases architectural register, register file, and register are used herein to refer to registers that are visible to the software and/or programmer (e.g., software-visible) and/or the registers that are specified by general-purpose macroinstructions to identify operands. These registers are contrasted to other non-architectural or non-architecturally visible registers in a given microarchitecture (e.g., temporary registers used by instructions, reorder buffers, retirement registers, etc.). The illustrated architectural registers include packed data registers 108. Each of the packed data registers is operable to store packed data, vector data, or SIMD data. The architectural registers also include packed data operation mask registers 109. Each of the packed data operation mask registers is operable to store a packed data operation mask.

The illustrated ISA includes an instruction set 102 that is supported by the processor. The instructions of the instruction set represent macroinstructions (e.g., instructions provided to the processor for execution), as opposed to microinstructions or micro-ops (e.g., those which result from a decoder of the processor decoding macroinstructions).

The instruction set includes one or more unique packed data element identification instructions 104. In some embodiments, the unique packed data element identification instructions may include one or more single source unique intra-packed data element identification instructions 105. In some embodiments, the unique packed data element identification instructions may include one or more two source unique inter-packed data element identification instructions 106. Various embodiments of the unique packed data element identification instructions and their uses will be disclosed further below.

The instruction set also includes one or more masked packed data instructions 103. The masked packed data instructions specify packed data operation masks (e.g., in packed data operation mask registers 109) as predicate operands that conditionally control whether or not packed data operations are performed on packed data elements of packed data operands (e.g., stored in packed data registers 108). As will be explained further below, in some embodiments, the masked packed data instructions 103 may use results of the unique packed data element identification instructions 104 as packed data operation masks, or may use packed data operation masks derived relatively simply from the results of the unique packed data element identification instructions.

The processor also includes execution logic 110. The execution logic is operable to execute or process the instructions of the instruction set (e.g., the unique packed data element identification instructions 104).

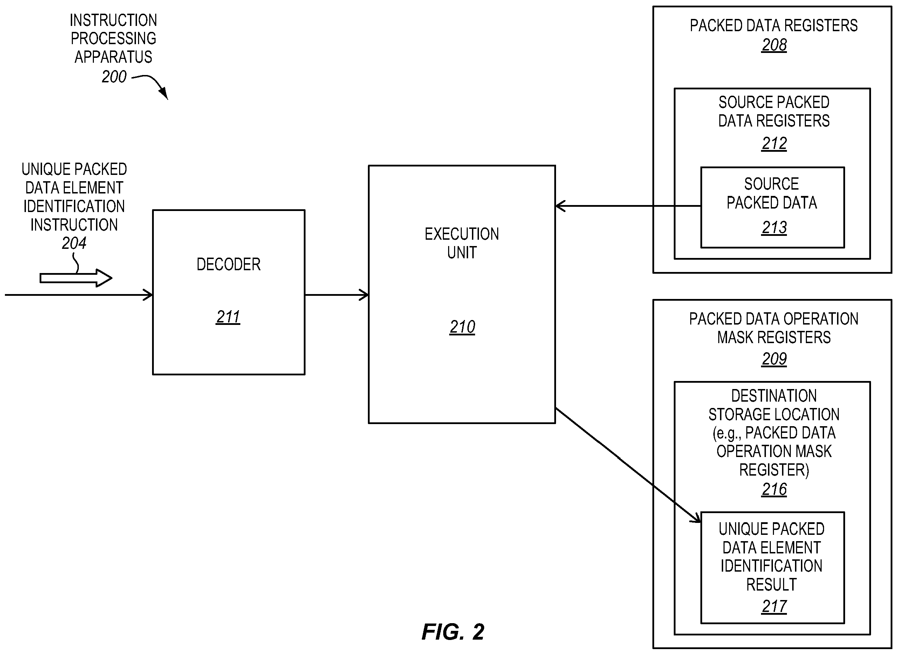

Figure 2 is a block diagram of an example embodiment of an instruction processing apparatus 200 having an execution unit 210 that is operable to execute instructions including an example embodiment of a unique packed data element identification instruction 204. In some embodiments, the instruction processing apparatus may be a processor and/or may be included in a processor. For example, in some embodiments, the instruction processing apparatus may be, or may be included in, the processor 100 of Figure 1, or one similar. Alternatively, the instruction processing apparatus may be included in a different processor, or electronic system.

The instruction processing apparatus 200 may receive the unique packed data element identification instruction 204. For example, the instruction may be received from an instruction fetch unit, an instruction queue, or a memory. The unique packed data element identification instruction may represent a machine instruction, macroinstruction, or control signal that is recognized by the instruction processing apparatus and that controls the apparatus to perform particular operations.

The unique packed data element identification instruction may explicitly specify (e.g., through bits or one or more fields) or otherwise indicate (e.g., implicitly indicate) a source packed data 213 having a plurality of packed data elements. In some embodiments, the packed data elements in the source packed data may represent index, for example index positions of an array and/or index of gather and/or scatter instructions. As shown, in some embodiments, the source packed data 213 may be stored in a source packed data register 212 in a set of packed data registers 208. Alternatively, the source packed data 213 may be stored in another source storage location suitable for packed data (e.g., in a memory location). The instruction may also specify or otherwise indicate a destination storage location 216 where a unique packed data element identification result 217 is to be stored. As shown, in some embodiments, the destination storage location may be a packed data operation mask register in a set of packed data operation mask registers 209. As will be explained further below, storing the result 217 in the packed data operation mask register may offer certain advantages, such as, for example, facilitating subsequent use of the result as a packed data operation mask or to derive a packed data operation mask.

The illustrated instruction processing apparatus includes an instruction decode unit or decoder 211. The decoder may receive and decode higher-level machine instructions or macroinstructions (e.g., instruction 204), and output one or more lower-level micro-operations, micro-code entry points, microinstructions, or other lower-level instructions or control signals that reflect and/or are derived from the original higher-level instruction. The one or more lower-level instructions or control signals may implement the operation of the higher-level instruction through one or more lower-level (e.g., circuit-level or hardware-level) operations. The decoder may be implemented using various different mechanisms including, but not limited to, microcode read only memories (ROMs), look-up tables, hardware implementations, programmable logic arrays (PLAs), and other mechanisms used to implement decoders known in the art.

In other embodiments, instead of having the decoder 211, an instruction emulator, translator, morpher, interpreter, or other instruction conversion logic may be used. Various different types of instruction conversion logic are known in the arts and may be implemented in software, hardware, firmware, or a combination thereof. The instruction conversion logic may receive the instruction, emulate, translate, morph, interpret, or otherwise convert the received instruction into one or more corresponding derived instructions or control signals. In still other embodiments, both instruction conversion logic and a decoder may be used. For example, the apparatus may have instruction conversion logic to convert the received instruction into one or more intermediate instructions, and a decoder to decode the one or more intermediate instructions into one or more lower-level instructions or control signals executable by native hardware of the instruction processing apparatus. Some or all of the instruction conversion logic may be located off-die from the rest of the instruction processing apparatus, such as on a separate die or in an off-die memory.

The instruction processing apparatus also includes the set of packed data registers 208. The packed data registers may represent architectural on-processor (e.g., on-die) processor storage location. The packed data registers may be implemented in different ways in different microarchitectures using well-known techniques, and are not limited to any particular type of circuit. Various different types of registers are suitable as long as they are capable of storing and providing data as described herein. Examples of suitable types of registers include, but are not limited to, dedicated physical registers, dynamically allocated physical registers using register renaming, and combinations thereof.

Referring again to Figure 2, the execution unit 210 is coupled with the packed data registers 208. The execution unit is also coupled with the decoder 211. The execution unit may receive from the decoder one or more micro-operations, micro-code entry points, microinstructions, other instructions, or other control signals, which reflect, or are derived from, the unique packed data element identification instruction 204.

The execution unit 210 is operable, in response to and/or as a result of the unique packed data element identification instruction 204 (e.g., in response to the control signals from the decoder) to store a unique packed data element identification result 217 in the destination storage location 216. As previously mentioned, the instruction 204 may specify or otherwise indicate the source packed data 213 and the destination storage location 216. The unique packed data element identification result 217 in the destination storage location 216 may indicate which of the plurality of the packed data elements are unique in the source packed data 213. For example, a given data element in the source packed data 213 (e.g., an index of integer data type) may be considered unique when it is not equal to any of the other data elements (e.g., indexes of integer data type) in the source packed data 213. Conversely, the given data element in the source packed data 213 may be considered not unique when it is equal to one or more of the other data elements in the source packed data 213.

In some embodiments, the execution unit, in response to the instruction, may compare each of the data elements of the source packed data for equality with all of the other data elements of the source packed data. This may be done in different ways. In one example embodiment, a first data element may be concurrently compared to all of the other data elements, then the second data element may be concurrently compared to all of the other data elements, and so serially through all data elements. In another example embodiment, each of the data elements may be compared to all of the other data elements concurrently. Alternatively, various other combinations of serial and concurrent comparisons may be used. The execution unit may include a number of comparator circuits or logics sufficient to perform the desired comparisons and interconnections (e.g., a crossbar or other interconnection network) sufficient to route the source data elements to the comparators.

As shown, in some embodiments, the execution unit, responsive to the instruction, may be operable to store the result 217 in a packed data operation mask and/or packed data operation mask register 216 of a set of packed data operation mask registers 209. Alternatively, in other embodiments, the result may be stored in another storage location, although as discussed further below storing the result in a packed data operation mask register may offer certain advantages (e.g., may facilitate use of the result for masking). In some embodiments, the execution unit may store a single bit in the result 217 for each corresponding data element of the source packed data 213. Each single bit may have a first binary value to indicate that the corresponding data element is unique in the source packed data, or a second binary value to indicate that the corresponding data element is not unique in the source packed data. According to one possible convention, the first binary value may be 0, and the second binary value may be 1. According to another possible convention, the first binary value may be 1, and the second binary value may be O.The single bit indicates which of the data elements are unique in a concise representation that does not need to store information indicating which of the data elements each of the non-unique data elements are equal to.

By way of example, the execution unit may include an arithmetic logic unit, a logic unit, a functional unit including comparison logic, or the like. The execution unit and/or the apparatus may include specific or particular logic (e.g., circuitry or other hardware potentially combined with software and/or firmware) operable to execute and/or process the unique packed data element identification instruction (e.g., perform comparisons of data elements), and store the unique packed data element identification result in response to the instruction (e.g., in response to one or more microinstructions or other control signals derived from the instruction).

To avoid obscuring the description, a relatively simple instruction processing apparatus 200 has been shown and described. In other embodiments, the instruction processing apparatus may optionally include other well-known components, such as, for example, an instruction fetch unit, an instruction scheduling unit, a branch prediction unit, instruction and data caches, instruction and data translation lookaside buffers, prefetch buffers, microinstruction queues, microinstruction sequencers, bus interface units, one or more caches, a retirement unit, a register renaming unit, other components included in processors, and various combinations thereof. Embodiments may have multiple cores, logical processors, or execution engines. An execution unit operable to execute an embodiment of an instruction disclosed herein may be included in at least one, at least two, most, or all of the cores, logical processors, or execution engines. There are literally numerous different combinations and configurations of components in processors, and embodiments are not limited to any particular combination or configuration.

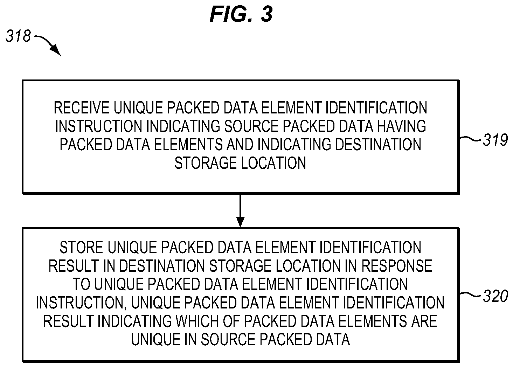

Figure 3 is a block flow diagram of an example embodiment of a method 318 of processing an example embodiment of a unique packed data element identification instruction. In various embodiments, the method may be performed by a general-purpose processor, a special-purpose processor (e.g., a graphics processor or a digital signal processor), or another type of digital logic device or instruction processing apparatus. In some embodiments, the method 318 may be performed by the processor 100 of Figure 1, or the instruction processing apparatus 200 of Figure 2. Alternatively, the method 318 may be performed by different embodiments of processors or instruction processing apparatus. Moreover, the processor 100, and the instruction processing apparatus 200, may perform embodiments of operations and methods the same as, similar to, or different than those of the method 318.

The method includes receiving the unique packed data element identification instruction, at block 319. In various embodiments, the instruction may be received at a processor, an instruction processing apparatus, or a portion thereof (e.g., a decoder, instruction converter, etc.). In various aspects, the instruction may be received from an off-processor source (e.g., from a main memory, a disc, or a bus or interconnect), or from an on-processor source (e.g., from an instruction cache). The unique packed data element identification instruction specifies or otherwise indicates a source packed data having a plurality of packed data elements. The instruction also specifies or otherwise indicates a destination storage location.

A unique packed data element identification result is stored in the destination storage location in response to, as a result of, and/or as specified by the unique packed data element identification instruction, at block 320. The unique packed data element identification result may indicate which of the plurality of the packed data elements are unique in the source packed data. For example, a given data element in the source packed data (e.g., an index of integer data type) may be considered unique when it is not equal to any of the other data elements (e.g., indexes of integer data type) in the source packed data. Conversely, the given data element in the source packed data may be considered not unique when it is equal to one or more of the other data elements in the source packed data.

In some embodiments, the result may be stored in a packed data operation mask and/or packed data operation mask register. Alternatively, in other embodiments, the result may be stored in another storage location. In some embodiments, the result may include a single bit for each corresponding data element of the source packed data. Each single bit may have a first binary value to indicate that the corresponding data element is unique in the source packed data, or a second binary value to indicate that the corresponding data element is not unique in the source packed data. According to one possible convention, the first binary value may be 0, and the second binary value may be 1. According to another possible convention, the first binary value may be 1, and the second binary value may be 0.

The illustrated method includes operations that are visible from outside a processor or instruction processing apparatus (e.g., visible from a software perspective). In other embodiments, the method may optionally include one or more operations occurring internally within the processor. By way of example, the instructions may be fetched, and then decoded, translated, emulated, or otherwise converted, into one or more other instructions or control signals. The source operands may be accessed and/or received. An execution unit may be enabled to perform the operation specified by the instruction, and may perform the operation (e.g., microarchitectural operations to implement the operations of the instructions may be performed, such as, for example, to compare each of the data elements of the source packed data with all other data elements of the source packed data). Different microarchitectural ways of performing the operation are contemplated.

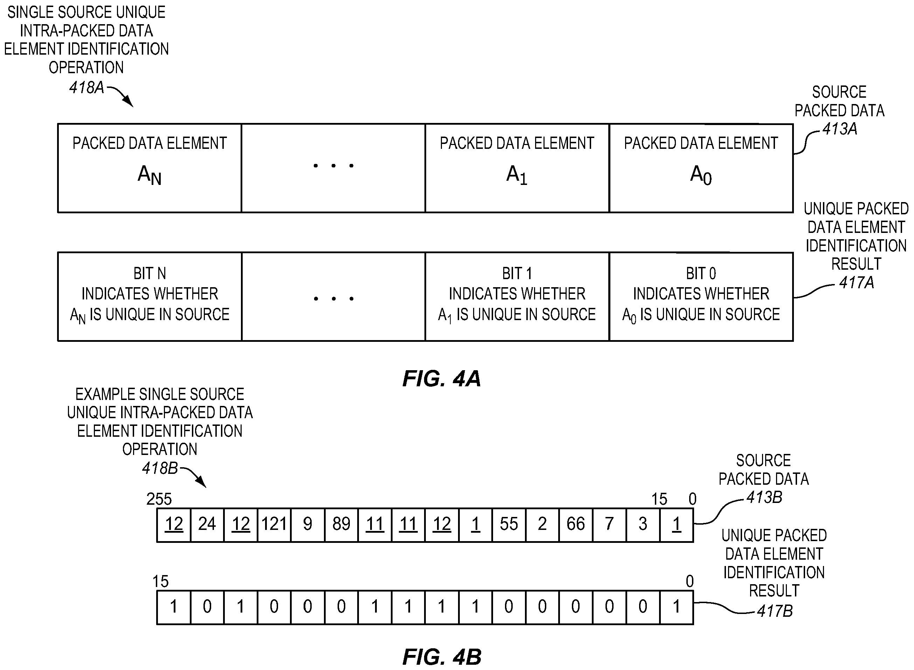

Figure 4A is a block diagram illustrating an embodiment of a single source unique intra-packed data element identification operation 418A that may be performed in response to an embodiment of a single source unique intra-packed data element identification instruction. The instruction indicates a source packed data 413A including a plurality of packed data elements A₀-A_{N}, where N is an integer. The number of the plurality of packed data elements is two or more. In various embodiments, the number may be between 2 and 64 (e.g., 2, 4, 8, 16, 32, 64), or more. The number is commonly a power of two, although this is not required. In some embodiments, the packed data elements are 8-bit byte, 16-bit word, 32-bit doubleword, or 64-bit quadword integers. In some embodiments, the source packed data is 128-bits wide, 256-bits wide, or 512-bits wide, or even wider.

A unique packed data element identification result 417A is stored in a destination storage location indicated by the instruction. In some embodiments, the destination storage location may be a packed data operation mask register and/or within a set of packed data operation mask registers (or another storage location where packed data operation masks are stored). The result includes a plurality of bits (i.e., bit 0-bit N). The number of bits is equal to the number of the packed data elements A₀-A_{N}. Each of the bits indicates whether or not the corresponding packed data element (i.e., the packed data element in the corresponding relative position) is unique in the source packed data. For example, bit 0 indicates whether or not packed data element A₀ is unique, bit 1 indicates whether or not packed data element A₁ is unique, and bit N indicates whether or not packed data element A_{N} is unique. According to one possible convention, each bit may be binary 0 to indicate that the corresponding packed data element is unique, or binary 1 to indicate that the corresponding packed data element is not unique. Alternatively, according to another possible convention, each bit may be binary 1 to indicate that the corresponding packed data element is unique, or binary 0 to indicate that the corresponding packed data element is not unique.

Figure 4B is a block diagram illustrating an illustrative example embodiment of a single source unique intra-packed data element identification operation 418B that may be performed on example packed data in response to an embodiment of a single source unique intra-packed data element identification instruction. The instruction indicates a source packed data 413B (in this case a 256-bit width source packed data although this is not required) including a plurality of packed data elements (in this case 16-bit word data elements although this is not required) having the particular integer values shown. In the illustration, from left to right, the integer values shown are 12, 24, 12, 121, 9, 89, 11, 11, 12, 1, 55, 2, 66, 7, 3, and 1. Underlining is used in the illustration to designate those integral values which are not unique in the source packed data. Notice that the first, seventh through tenth, fourteenth, and sixteenth integers (when counted from the right) are not unique, whereas all other integers are unique.

A unique packed data element identification result 417B is stored in a destination storage location indicated by the instruction. In some embodiments, the destination storage location may be a packed data operation mask register. The result includes a plurality of bits (in this case sixteen bits since there are sixteen packed data elements in the source packed data although this is not required). Each of the bits indicates whether or not the corresponding packed data element (i.e., the packed data element in the corresponding relative position) is unique in the source packed data. In the convention of the illustrated embodiment, each bit is binary 0 when the corresponding packed data element is unique, or binary 1 when the corresponding packed data element is not unique. Since the first, seventh through tenth, fourteenth, and sixteenth integers (when counted from the right) are not unique, the first, seventh through tenth, fourteenth, and sixteenth bits are one, whereas all other bits are zero, for this particular example data.

In some embodiments, the unique packed data element identification results may be used as, or used to derive, packed data operation masks for masked packed data instructions. As previously mentioned, embodiments of the invention are implemented in processors that support one or more masked packed data instructions that perform masked packed data operations. The masked packed data instructions may each specify or otherwise indicate one or more packed data operation masks. The masks may be stored in packed data operation mask registers. The packed data operation masks may also be referred to herein simply as masks. Each mask may represent a predicate operand or conditional control operand that may mask, predicate, or conditionally control whether or not packed data operations associated with the masked packed data instruction are to be performed and/or whether or not results of the packed data operations are to be stored in a result packed data. In some embodiments, each mask may be operable to mask the packed data operations at per-data element (e.g., result data element) granularity. Each mask may allow the packed data operations for different result data elements to be predicated or conditionally controlled separately and/or independently of the other result data elements.

The masks may each include multiple mask elements, predicate elements, conditional control elements, or flags. The elements or flags may be included in a one-to-one correspondence with result data elements (e.g., if there are eight result data elements there may be eight elements or flags). Each element or flag may be operable to mask a separate corresponding packed data operation and/or storage of a separate corresponding result data element. In some embodiments, each element or flag may be a single bit. The single bit may allow specifying either of two different possibilities (e.g., perform the operation versus do not perform the operation, store a result of the operation versus do not store a result of the operation, etc.). A binary value of each bit of the mask may predicate or control whether or not a packed data operation associated with the masked packed data instruction is to be performed on one or more corresponding source packed data elements and/or whether or not a result of the packed data operation is to be stored in the result packed data. According to one possible convention, each bit may be set (i.e., have a binary value of 1) to allow, or may be cleared (i.e., have a binary value of 0) to not allow, a result of a packed data operation to be stored in a corresponding result data element. The opposite convention is also possible.

Different types of masking are possible. In some embodiments, merging-masking may be performed. In merging-masking, when an operation is masked out, a value of a corresponding data element from a source packed data may be stored in the corresponding result data element. For example, if a source is to be reused as the destination, then the corresponding destination data element may retain its initial source value (i.e., not be updated with a calculation result). In other embodiments, zeroing-masking may be performed. In zeroing-masking, when an operation is masked out, the corresponding result data element may be zeroed out or a value of zero may be stored in the corresponding result data element. Alternatively, in other embodiments, other predetermined values may be stored in the masked out result data elements.

In some embodiments, the packed data operation of the masked packed data instruction may optionally be performed on one or more corresponding source data elements regardless of the corresponding bits of the mask, but the results may or may not be stored in the result packed data depending upon the corresponding bits of the mask. Alternatively, in another embodiment, the packed data operations may optionally be omitted (i.e., not performed) if the corresponding bits of the mask specify that the results of the operations are not to be stored in the packed data result. In some embodiments, exceptions and/or violations may optionally be suppressed for, or not raised by, an operation on a masked-off element. In some embodiments, for masked packed data instructions with a memory operand, memory faults may optionally be suppressed for masked-off data elements.

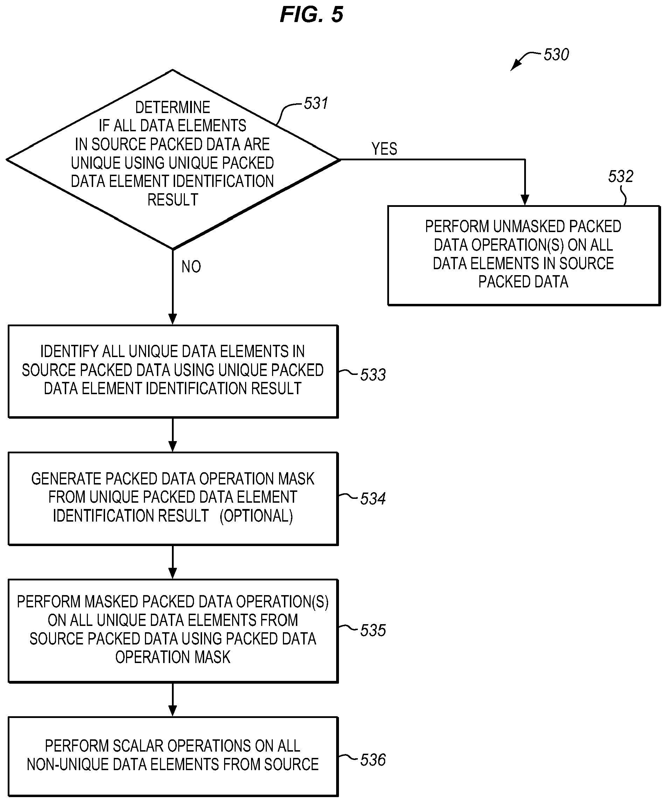

Figure 5 is a block flow diagram of an embodiment of a method 530 of using a unique packed data element identification result. The method may be performed by a processor or instruction processing apparatus processing sequences of instructions or code.

A determination is made at block 531 whether or not all data elements in a source packed data are unique using the unique packed data element identification result. If the determination at block 531 is that all of the data elements in the source packed data are unique (i.e., the determination is "yes"), then one or more ordinary unmasked packed data operations are performed on all data elements of the source packed data, at block 532. This may involve a conditional jump, branch, or other conditional movement operation in code (or alteration of program flow) based on the unique packed data element identification result. Unmasked packed data operations may tend to be somewhat more efficient than masked packed data operations.

Alternatively, if the determination at block 531 is that not all of the data elements in the source packed data are unique (i.e., the determination is "no"), then a subset of all unique data elements in the source packed data are identified using the unique packed data element identification result, at block 533. For example, in one embodiment where binary 0 is used to designate unique data elements, a subset of all unique data elements having corresponding bits that are equal to binary 0 may be identified. This may involve a conditional jump, branch, or other conditional movement operation in code (or alteration of program flow) based on the unique packed data element identification result.

In some embodiments, a packed data operation mask may optionally be generated from the unique packed data element identification result, at block 534. In some embodiments, the bits of the unique packed data element identification result may be inverted or logically NOT'd to generate the packed data operation mask. For example, a bitwise logical NOT or bitwise logical inverse instruction may indicate the unique packed data element identification result as a source, and may store a result packed data operation mask in a packed data operation mask register. For example, this may be the case when binary 1 is used to allow a packed data operation to be performed and a result of the packed data operation to be stored, and binary 0 is used to indicate unique packed data elements. Accordingly, in some embodiments, the packed data operation mask may be derived from the unique packed data element identification result. Alternatively, in other embodiments, the unique packed data element identification result may be used directly as the packed data operation mask without any operations needing to be performed. That is, in some embodiments, the unique packed data element identification result may be indicated directly and used by another instruction as a packed data operation mask. For example, this may be the case when binary 1 is used to allow a packed data operation to be performed and a result of the packed data operation to be stored, and binary 1 is used to indicate unique packed data elements.

One or more masked packed data operations are performed on the subset of all unique data elements from the source packed data using the packed data operation mask, at block 535. Various types of operations, such as, for example, arithmetic, logical, or other operations, are suitable. Since these data elements are unique, and don't have underlying data dependencies with one another, efficiency and/or speed of processing may be increased by performing these operations using packed data or vector operations.

One or more scalar operations are performed on all non-unique data elements from the source packed data, at block 536. These scalar operations may be performed on the data elements separately or individually and in an order that reflects the underlying data dependencies.

This is just one example embodiment of a method of using a unique packed data element identification result. Other methods are also contemplated. For example, in an alternate embodiment, if any data elements are non-unique (e.g., any data dependencies exist) then all data elements may be processed separately or individually by scalar operations, whereas if all data elements are unique then all data elements may be processed by one or more unmasked packed data operations. In another alternate embodiment, rather than processing the non-unique data elements through scalar operations, a subset of unique data elements may be selected from among the non-unique data elements and that subset may be processed by one or more packed data operations concurrently or in parallel. Then, another subset of unique data elements may be selected from among the remaining non-unique data elements and that subset may be processed by one or more packed data operations, and so on. For example, consider the data elements 3, 3, 3, 4, 4, 5, 6, and left to right ordering of dependencies. The unique packed data element identification instruction/operation may generate, in some embodiments, the result 1, 1, 1, 1, 1, 0, 0. The data elements 5 and 6 may be processed by one or more packed data operations using the mask 0, 0, 0, 0, 0, 1, 1. A unique subset of the non-unique data elements **3**, 3, 3, **4**, 4 may be processed by one or more packed data operations using a packed data operation mask 1, 0, 0, 1, 0, 0, 0. Then, another unique subset of the non-unique data elements 3, **3**, 3, 4, **4** may be processed by one or more packed data operations using a packed data operation mask 0, 1, 0, 0, 1, 0, 0, and so on.

Moreover, it is to be understood that the unique packed data element identification instructions disclosed herein are general-purpose instructions, with more general applicability, and that those skilled in the art and having the benefit of the present disclosure will appreciate that there are a number of other uses for the instructions and the results that they produce. Other examples of uses include, but are not limited to, those associated with vectorization of code, creating histograms, populating lists or keeping track of different unique values, inform program decisions, altering program flow, performing conditional branching, jumping, or otherwise conditionally moving around in program code, performing branch support, etc.

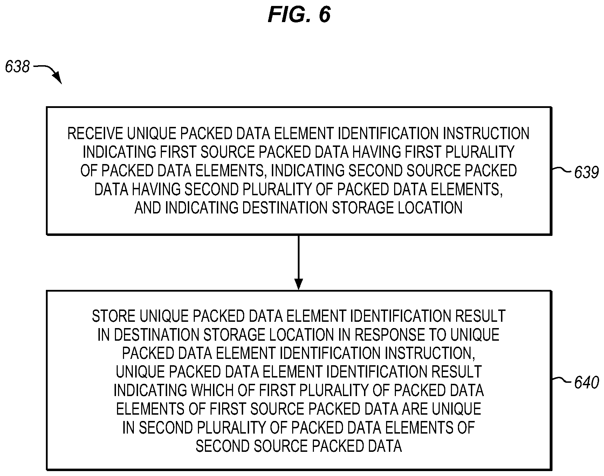

Figure 6 is a block flow diagram of an example embodiment of a method 638 of processing an example embodiment of a two source unique inter-packed data element identification instruction. In various embodiments, the method may be performed by a general-purpose processor, a special-purpose processor (e.g., a graphics processor or a digital signal processor), or another type of digital logic device or instruction processing apparatus. In some embodiments, the method 638 may be performed by the processor 100 of Figure 1, or the instruction processing apparatus 200 of Figure 2. Alternatively, the method 638 may be performed by different embodiments of processors or instruction processing apparatus. Moreover, the processor 100, and the instruction processing apparatus 200, may perform embodiments of operations and methods the same as, similar to, or different than those of the method 638.

The unique two source inter-packed data element identification instruction is received, at block 639. The unique two source inter-packed data element identification instruction indicates a first source packed data having a first plurality of packed data elements, indicates a second source packed data having a second plurality of packed data elements, and indicates a destination storage location.

A unique packed data element identification result is stored in the destination storage location in response to the unique two source inter-packed data element identification instruction, at block 640. The unique packed data element identification result indicates which of the first plurality of packed data elements of the first source packed data are unique in the second plurality of packed data elements of the second source packed data.

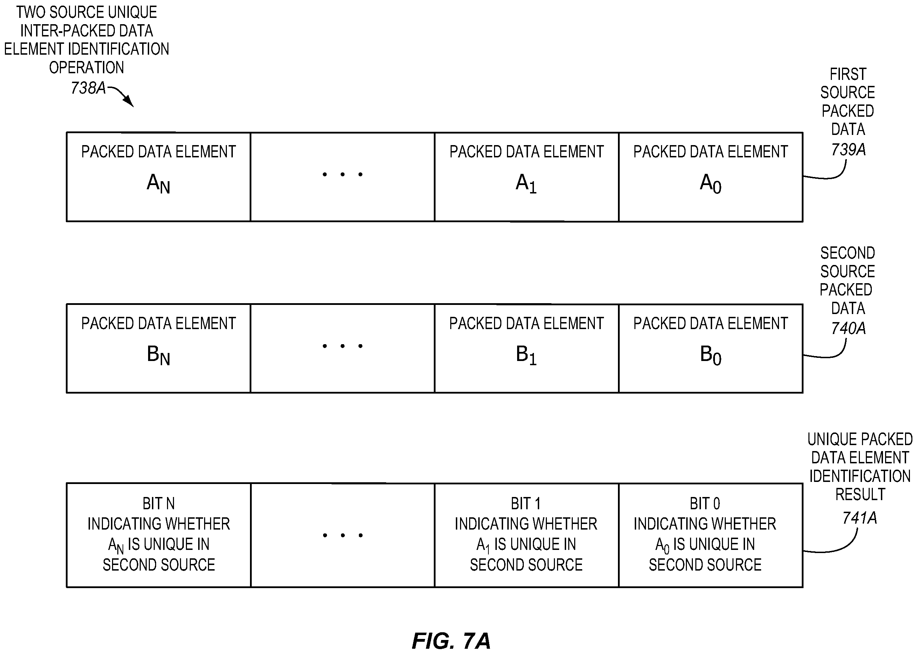

Figure 7A is a block diagram illustrating an embodiment of a two source unique inter-packed data element identification operation 738A that may be performed in response to an embodiment of a two source unique inter-packed data element identification instruction. The instruction indicates a first source packed data 739A including a plurality of packed data elements A₀-A_{N} and indicates a second source packed data 740A including a plurality of packed data elements B₀-B_{N}, where N is an integer. The number of the packed data elements may be between 2 and 64 (e.g., 2, 4, 8, 16, 32, 64), or more. The number is commonly a power of two, although this is not required. In some embodiments, the packed data elements are 8-bit byte, 16-bit word, 32-bit doubleword, or 64-bit quadword integers. In some embodiments, the source packed data is 128-bits wide, 256-bits wide, or 512-bits wide, or even wider.

A unique packed data element identification result 741A is stored in a destination storage location indicated by the instruction. In some embodiments, the destination storage location may be a packed data operation mask register and/or within a set of packed data operation mask registers (or another storage location where packed data operation masks are stored). The result includes a plurality of bits (i.e., bit 0-bit N). The number of bits is equal to the number of the packed data elements. Each of the bits indicates whether or not the corresponding data element of the first source packed data is unique in the second source packed data. For example, bit 0 indicates whether or not packed data element A₀ is unique among B₀-B_{N}, bit 1 indicates whether or not packed data element A₁ is unique among B₀-B_{N}, and bit N indicates whether or not packed data element A_{N} is unique among B₀-B_{N}. According to one possible convention, each bit may be binary 0 to indicate that the corresponding packed data element is unique, or binary 1 to indicate that the corresponding packed data element is not unique. Alternatively, according to another possible convention, each bit may be binary 1 to indicate that the corresponding packed data element is unique, or binary 0 to indicate that the corresponding packed data element is not unique.

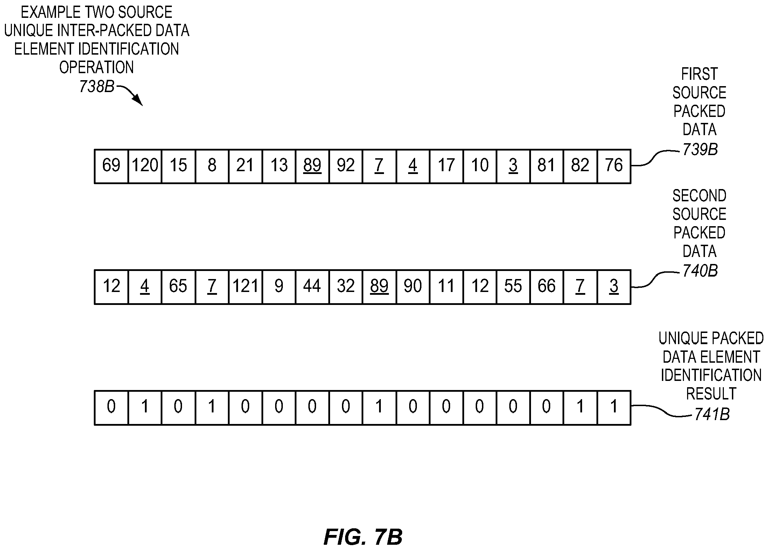

Figure 7B is a block diagram illustrating an illustrative example embodiment of a two source unique inter-packed data element identification operation 738B that may be performed on example packed data in response to an embodiment of a two source unique inter-packed data element identification instruction. The instruction indicates a first source packed data 739B and a second source packed data 740B (in this case each 512-bit width packed data although this is not required) each including a plurality of packed data elements (in this case 32-bit doubleword data elements although this is not required) having the particular integer values shown. Underlining is used in the illustration to designate which of the data elements of the first source packed data are unique in the second source packed data.

A unique packed data element identification result 741B is stored in a destination storage location indicated by the instruction. In some embodiments, the destination storage location may be a packed data operation mask register. The result includes a plurality of bits (in this case sixteen bits since there are sixteen packed data elements in each of the source packed data although this is not required). Each of the bits indicates whether or not the corresponding packed data element (i.e., the packed data element in the corresponding relative position) of the first source packed data is unique in the second source packed data. In the convention of the illustrated embodiment, each bit is binary 0 when the corresponding packed data element is unique, or binary 1 when the corresponding packed data element is not unique, although this is not required.

The two source unique inter-packed data element identification instruction/operation is useful for various different purposes. In one aspect, the first and second sources may indicate the same data and the uses may be similar to these previously described for the one source instruction except that the comparison of the data element with itself should be ignored. In another aspect, the instruction/operation may be used to generate histograms or binning type of operations. For example, the second source may include unique values already in a histogram. Unique values detected in the first source may be added to the set of unique values in the histogram for subsequent calculations. Other uses, such as keeping track of a total number of unique values, are also contemplated.

In the embodiments described above, the set of data elements that are desired to be compared for uniqueness, and the set of elements to which these data elements are to be compared, have both been the same sets. In particular, they have been the full set of data elements, for example, in the case of the intra-packed instructions all of the packed data elements of the source. In other embodiments, this may not be the case. For example, in some embodiments, these two sets may be equal but each a subset of all of the data elements in a source packed data. As another example, in other embodiments, they may be different (i.e., include at least one different data element).

For example, consider the following data elements, in a left to right order of dependencies: 3, 3, 3, 4, 4, 5, and 6. Consider that it is desired to check for conflicts for the 1st and 4th data elements, and check for conflicts among the 1st, 2nd, 3rd, and 4th data elements. A unique packed data element identification instruction, of some embodiments, may indicate multiple packed data operation masks. In particular, the unique packed data element identification instruction may indicate one or more source packed data operation masks, in addition to a source packed data operand. For example, the instruction may have the form
UNIQUE k1, k2, k3, zmm1; or
UNIQUE k1, k2, zmm1
where k1 is a result packed data operation mask, k2 is a source packed data operation mask that identifies a subset of data elements for which to check for uniqueness, k3 is a source packed data operation mask that identifies a subset of data elements on which to make comparisons. In the second instruction listed, it is implicit that the subset of data elements for which to check for uniqueness and the subset of data elements on which to make comparisons is the same. In the aforementioned example, if k2 = 1, 0, 0, 1, 0, 0, 0, and k3 = 1, 1, 1, 1, 0, 0, 0, then the result will be (assuming 1 for conflict) k1 = 1, 0, 0, 0, 0, 0, 0. Each bit of the result may be placed on a related position from k2 mask. Non-k2-masked elements may be zeroed or stay unchanged.

Such embodiments are useful, for example, when indexes are part of a structure in which the indexes lie non-stride in memory or register. For example, Index1, data1, index2, data2, index3, data3, etc. Here the mask 1, 0, 1, 0, 1, 0, etc. may be used assuming the data is the same size as the indexes.

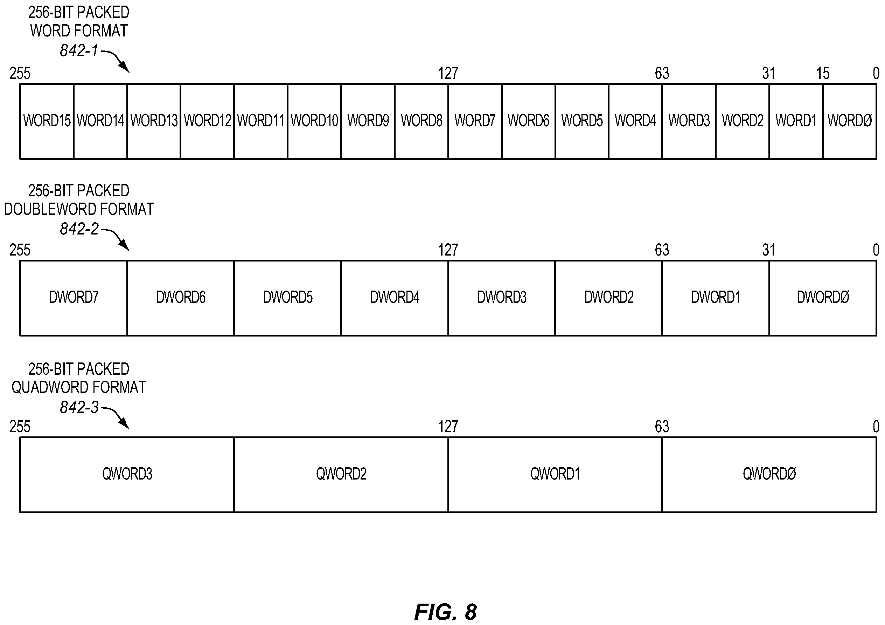

Figure 8 is a block diagram illustrating several example embodiments of suitable packed data formats. A 256-bit packed word format 842-1 is 256-bits wide and includes sixteen 16-bit wide word data elements. The sixteen 16-bit word data elements are labeled in the illustration from least to most significant bit positions as WORDO through WORD15. A 256-bit packed doubleword format 842-2 is 256-bits and includes eight 32-bit doubleword (dword) data elements. The eight 32-bit doubleword data elements are labeled in the illustration from least to most significant bit positions as DWORDO through DWORD7. A 256-bit packed quadword format 842-3 is 256-bits and includes four 64-bit quadword data elements. The four 64-bit quadword data elements are labeled in the illustration from the least to most significant bit positions as QWORDO through QWORD3.

Other packed data formats are also suitable. For example, other suitable 256-bit packed data formats include 256-bit packed 8-bit byte format. Moreover, packed data formats either larger and/or smaller than 256-bits are also suitable. For example, 512-bit (or larger) packed data formats and/or 128-bit (or smaller) packed data formats of the aforementioned data types are also suitable. In general, the 512-bit packed data formats may have twice as many data elements as the 256-bit packed data formats for the same data type, while the 128-bit packed data formats may have half as many data elements as the 256-bit packed data formats for the same data type. Generally, the number of packed data elements is equal to the size in bits of the packed data divided by the size in bits of the packed data elements.

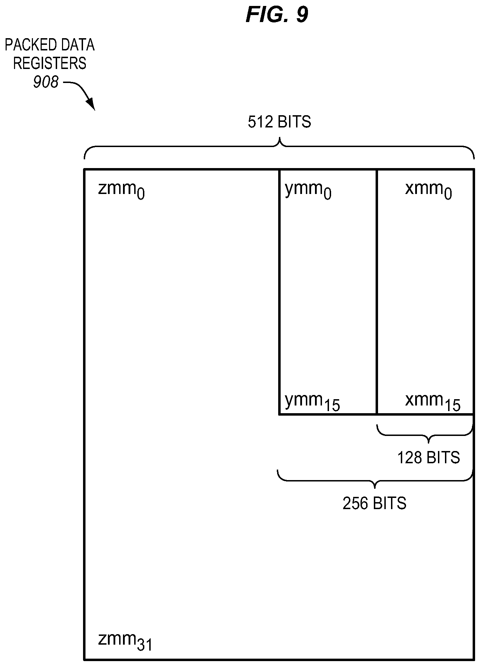

Figure 9 is a block diagram of an example embodiment of a suitable set of packed data registers 908. The illustrated packed data registers include thirty-two 512-bit packed data or vector registers. These thirty-two 512-bit registers are labeled ZMM0 through ZMM31. In the illustrated embodiment, the lower order 256-bits of the lower sixteen of these registers, namely ZMM0-ZMM15, are aliased or overlaid on respective 256-bit packed data or vector registers labeled YMM0-YMM15, although this is not required. Likewise, in the illustrated embodiment, the lower order 128-bits of YMM0-YMM15 are aliased or overlaid on respective 128-bit packed data or vector registers labeled XMM0-XMM1, although this also is not required. The 512-bit registers ZMM0 through ZMM31 are operable to hold 512-bit packed data, 256-bit packed data, or 128-bit packed data. The 256-bit registers YMM0-YMM15 are operable to hold 256-bit packed data, or 128-bit packed data. The 128-bit registers XMM0-XMM1 are operable to hold 128-bit packed data. Each of the registers may be used to store either packed floating-point data or packed integer data. Different data element sizes are supported including at least 8-bit byte data, 16-bit word data, 32-bit doubleword or single precision floating point data, and 64-bit quadword or double precision floating point data. Alternate embodiments of packed data registers may include different numbers of registers, different sizes of registers, and may or may not alias larger registers on smaller registers.

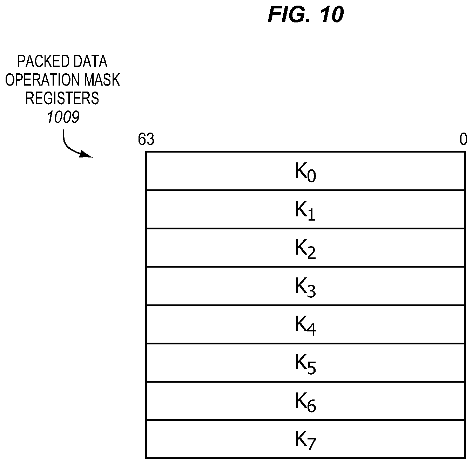

Figure 10 is a block diagram of an example embodiment of a suitable set of packed data operation mask registers 1009. Each of the packed data operation mask registers may be used to store a packed data operation mask. In the illustrated embodiment, the set includes eight packed data operation mask registers labeled k0 through k7. Alternate embodiments may include either fewer than eight (e.g., two, four, six, etc.) or more than eight (e.g., sixteen, twenty, thirty-two, etc.) packed data operation mask registers. In the illustrated embodiment, each of the packed data operation mask registers is 64-bits. In alternate embodiments, the widths of the packed data operation mask registers may be either wider than 64-bits (e.g., 80-bits, 128-bits, etc.) or narrower than 64-bits (e.g., 8-bits, 16-bits, 32-bits, etc). The packed data operation mask registers may be implemented in different ways using well known techniques and are not limited to any known particular type of circuit. Various different types of registers are suitable as long as they are capable of storing and providing data as described herein. Examples of suitable registers include, but are not limited to, dedicated physical registers, dynamically allocated physical registers using register renaming, and combinations thereof.

In some embodiments, the packed data operation mask registers 1009 may be a separate, dedicated set of architectural registers. In some embodiments, the instructions may encode or specify the packed data operation mask registers in different bits or one or more different field combinations of an instruction format than that used to encode or specify other types of registers (e.g., packed data registers). By way of example, the masked packed data instructions may use three bits (e.g., a 3-bit field) to encode or specify any one of the eight packed data operation mask registers k0 through k7. In alternate embodiments, either fewer or more bits may be used when there are fewer or more packed data operation mask registers, respectively. In one particular implementation, only packed data operation mask registers k1 through k7 (but not k0) may be addressed as a predicate operand to predicate a masked packed data operation. The register k0 may be used as a regular source or destination, but may not be encoded as a predicate operand (e.g., if k0 is specified it has an all ones or "no mask" encoding). In other embodiments, either all or only some of the registers may be encoded as a predicate operand.

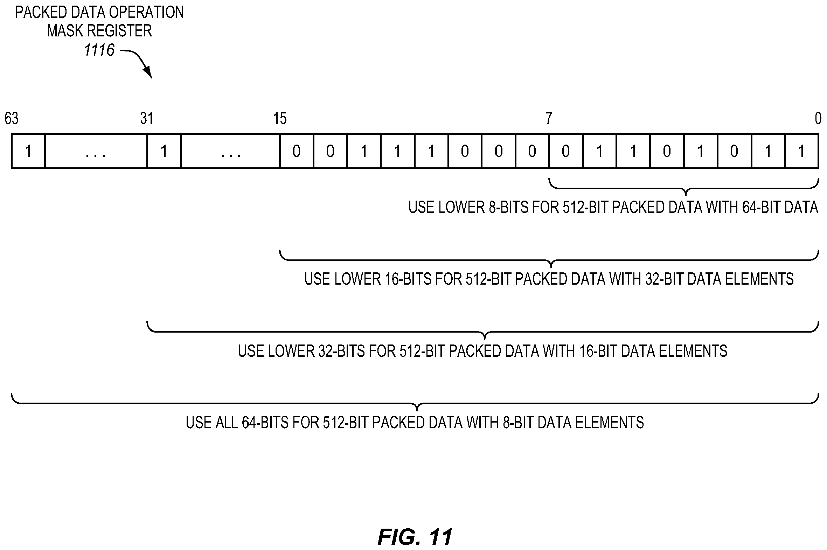

Figure 11 is a diagram illustrating an example embodiment of a packed data operation mask register 1116 and showing that the number of bits that are used for a unique packed data element identification result and/or as a packed data operation mask may depend upon the packed data width and the data element width. The illustrated example embodiment of the packed data operation mask register is 64-bits wide, although this is not required. Depending upon the combination of the packed data width and the data element width, either all 64-bits, or only a subset of the 64-bits, may be used. Generally, when a single, per-element bit is used, the number of bits in the packed data operation mask register is equal to the packed data width in bits divided by the packed data element width in bits.

Several illustrative examples for 512-bit wide packed data are shown. Namely, when the packed data width is 512-bits and the packed data element width is 64-bits, then only the lowest-order 8-bits of the register are used. When the packed data width is 512-bits and the packed data element width is 32-bits, then only the lowest-order 16-bits of the register are used. When the packed data width is 512-bits and the packed data element width is 16-bits, then only the lowest-order 32-bits of the register are used. When the packed data width is 512-bits and the packed data element width is 8-bits, then all 64-bits of the register are used. In the illustrated embodiment, the lowest-order subset or portion of the register is used, although this is not required. In alternate embodiments a highest-order subset, or some other subset, may optionally be used. Moreover, in the illustrated embodiment, only a 512-bit packed data width is considered, however the same principle applies for other packed data widths, such as, for example, 64-bit, 128-bit, 256-bit, and other widths.

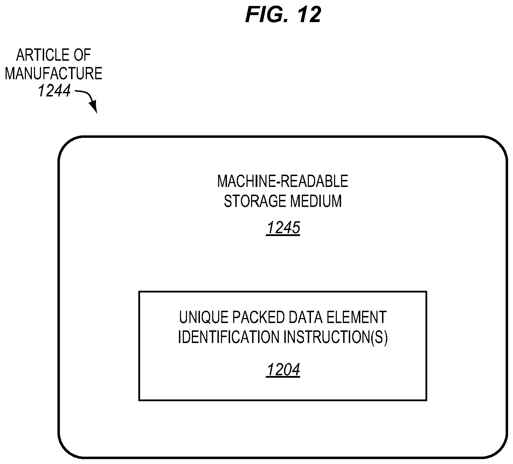

Figure 12 is a block diagram of an article of manufacture (e.g., a computer program product) 1244 including a machine-readable storage medium 1245. In some embodiments, the machine-readable storage medium may be a tangible and/or non-transitory machine-readable storage medium. In various example embodiments, the machine-readable storage medium may include a floppy diskette, an optical disk, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a semiconductor memory, other types of memory, or a combinations thereof. In some embodiments, the medium may include one or more solid data storage materials, such as, for example, a semiconductor data storage material, a phase-change data storage material, a magnetic data storage material, an optically transparent solid data storage material, etc.

The machine-readable storage medium stores one or more unique packed data element identification instructions 1204. Each of the unique packed data element identification instructions, if executed by a machine, is operable to cause the machine to store a unique packed data element identification result in a destination storage location indicated by the instruction. Any of the instructions and results disclosed herein are suitable. Moreover, other instructions may be stored on the medium (e.g., masked packed data instructions that directly or indirectly depend from the result, logical NOT instructions that directly or indirectly depend the result, conditional jump, branch or other conditional movement instructions that directly or indirectly depend from the result, etc.).

Examples of different types of machines include, but are not limited to, processors (e.g., general-purpose processors and special-purpose processors), instruction processing apparatus, and various electronic devices having one or more processors or instruction processing apparatus. A few representative examples of such electronic devices include, but are not limited to, computer systems, desktops, laptops, notebooks, servers, network routers, network switches, nettops, set-top boxes, cellular phones, video game controllers, etc.

An instruction set includes one or more instruction formats. A given instruction format defines various fields (number of bits, location of bits) to specify, among other things, the operation to be performed (opcode) and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. A set of SIMD extensions referred to the Advanced Vector Extensions (AVX) (AVX1 and AVX2) and using the Vector Extensions (VEX) coding scheme, has been , has been released and/or published (e.g., see Intel® 64 and IA-32 Architectures Software Developers Manual, October 2011; and see Intel® Advanced Vector Extensions Programming Reference, June 2011).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

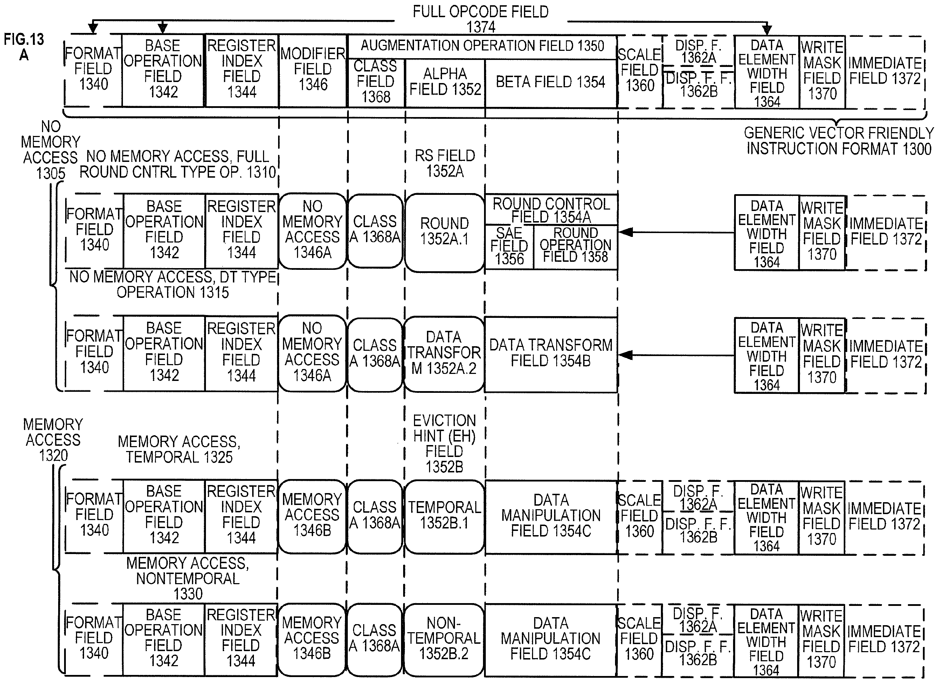

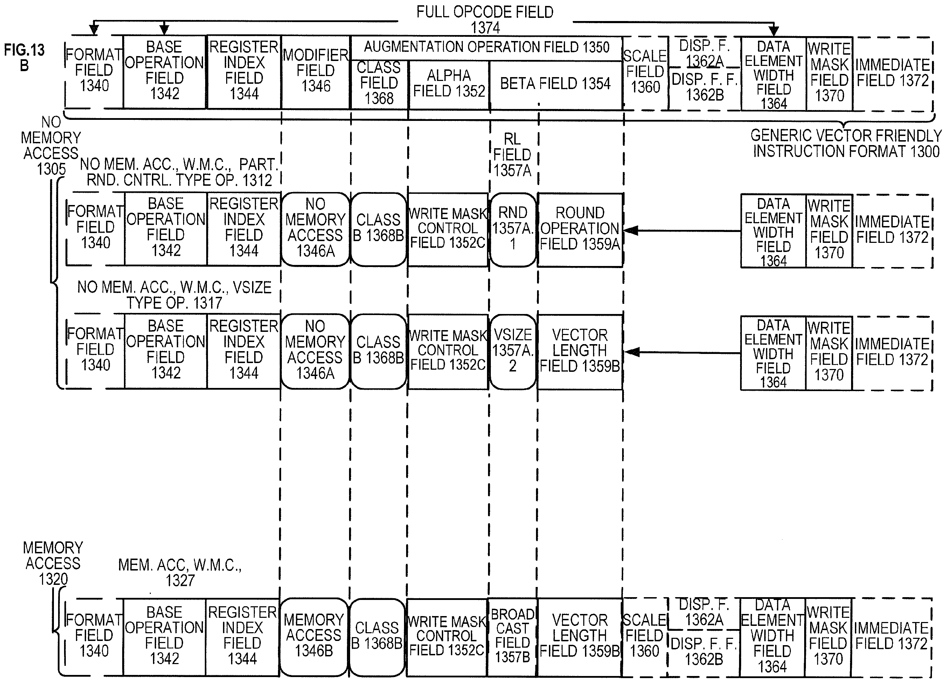

Figures 13A-13B are block diagrams illustrating a generic vector friendly instruction format and instruction templates thereof according to embodiments of the invention. Figure 13A is a block diagram illustrating a generic vector friendly instruction format and class A instruction templates thereof according to embodiments of the invention; while Figure 13B is a block diagram illustrating the generic vector friendly instruction format and class B instruction templates thereof according to embodiments of the invention. Specifically, a generic vector friendly instruction format 1300 for which are defined class A and class B instruction templates, both of which include no memory access 1305 instruction templates and memory access 1320 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in Figure 13A include: 1) within the no memory access 1305 instruction templates there is shown a no memory access, full round control type operation 1310 instruction template and a no memory access, data transform type operation 1315 instruction template; and 2) within the memory access 1320 instruction templates there is shown a memory access, temporal 1325 instruction template and a memory access, non-temporal 1330 instruction template. The class B instruction templates in Figure 13B include: 1) within the no memory access 1305 instruction templates there is shown a no memory access, write mask control, partial round control type operation 1312 instruction template and a no memory access, write mask control, vsize type operation 1317 instruction template; and 2) within the memory access 1320 instruction templates there is shown a memory access, write mask control 1327 instruction template.

The generic vector friendly instruction format 1300 includes the following fields listed below in the order illustrated in Figures 13A-13B.

Format field 1340 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1342 - its content distinguishes different base operations.

Register index field 1344 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1346 - its content distinguishes occurrences of instructions in the generic vector instruction format that specify memory access from those that do not; that is, between no memory access 1305 instruction templates and memory access 1320 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1350 - its content distinguishes which one of a variety of different operations to be performed in addition to the base operation. This field is context specific. In one embodiment of the invention, this field is divided into a class field 1368, an alpha field 1352, and a beta field 1354. The augmentation operation field 1350 allows common groups of operations to be performed in a single instruction rather than 2, 3, or 4 instructions.

Scale field 1360 - its content allows for the scaling of the index field's content for memory address generation (e.g., for address generation that uses 2^{scale} * index + base).

Displacement Field 1362A- its content is used as part of memory address generation (e.g., for address generation that uses 2^{scale} * index + base + displacement).

Displacement Factor Field 1362B (note that the juxtaposition of displacement field 1362A directly over displacement factor field 1362B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1374 (described later herein) and the data manipulation field 1354C. The displacement field 1362A and the displacement factor field 1362B are optional in the sense that they are not used for the no memory access 1305 instruction templates and/or different embodiments may implement only one or none of the two.

Data element width field 1364 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1370 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1370 allows for partial vector operations, including loads, stores, arithmetic, logical, etc. While embodiments of the invention are described in which the write mask field's 1370 content selects one of a number of write mask registers that contains the write mask to be used (and thus the write mask field's 1370 content indirectly identifies that masking to be performed), alternative embodiments instead or additional allow the mask write field's 1370 content to directly specify the masking to be performed.

Immediate field 1372 - its content allows for the specification of an immediate. This field is optional in the sense that is it not present in an implementation of the generic vector friendly format that does not support immediate and it is not present in instructions that do not use an immediate.

Class field 1368 - its content distinguishes between different classes of instructions. With reference to Figures 13A-B, the contents of this field select between class A and class B instructions. In Figures 13A-B, rounded corner squares are used to indicate a specific value is present in a field (e.g., class A 1368A and class B 1368B for the class field 1368 respectively in Figures 13A-B).

### Instruction Templates of Class A

In the case of the non-memory access 1305 instruction templates of class A, the alpha field 1352 is interpreted as an RS field 1352A, whose content distinguishes which one of the different augmentation operation types are to be performed (e.g., round 1352A.1 and data transform 1352A.2 are respectively specified for the no memory access, round type operation 1310 and the no memory access, data transform type operation 1315 instruction templates), while the beta field 1354 distinguishes which of the operations of the specified type is to be performed. In the no memory access 1305 instruction templates, the scale field 1360, the displacement field 1362A, and the displacement scale filed 1362B are not present.

### No-Memory Access Instruction Templates - Full Round Control Type Operation

In the no memory access full round control type operation 1310 instruction template, the beta field 1354 is interpreted as a round control field 1354A, whose content(s) provide static rounding. While in the described embodiments of the invention the round control field 1354A includes a suppress all floating point exceptions (SAE) field 1356 and a round operation control field 1358, alternative embodiments may support may encode both these concepts into the same field or only have one or the other of these concepts/fields (e.g., may have only the round operation control field 1358).

SAE field 1356 - its content distinguishes whether or not to disable the exception event reporting; when the SAE field's 1356 content indicates suppression is enabled, a given instruction does not report any kind of floating-point exception flag and does not raise any floating point exception handler.

Round operation control field 1358 - its content distinguishes which one of a group of rounding operations to perform (e.g., Round-up, Round-down, Round-towards-zero and Round-to-nearest). Thus, the round operation control field 1358 allows for the changing of the rounding mode on a per instruction basis. In one embodiment of the invention where a processor includes a control register for specifying rounding modes, the round operation control field's 1350 content overrides that register value.

### No Memory Access Instruction Templates - Data Transform Type Operation

In the no memory access data transform type operation 1315 instruction template, the beta field 1354 is interpreted as a data transform field 1354B, whose content distinguishes which one of a number of data transforms is to be performed (e.g., no data transform, swizzle, broadcast).

In the case of a memory access 1320 instruction template of class A, the alpha field 1352 is interpreted as an eviction hint field 1352B, whose content distinguishes which one of the eviction hints is to be used (in Figure 13A, temporal 1352B.1 and non-temporal 1352B.2 are respectively specified for the memory access, temporal 1325 instruction template and the memory access, non-temporal 1330 instruction template), while the beta field 1354 is interpreted as a data manipulation field 1354C, whose content distinguishes which one of a number of data manipulation operations (also known as primitives) is to be performed (e.g., no manipulation; broadcast; up conversion of a source; and down conversion of a destination). The memory access 1320 instruction templates include the scale field 1360, and optionally the displacement field 1362A or the displacement scale field 1362B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1352 is interpreted as a write mask control (Z) field 1352C, whose content distinguishes whether the write masking controlled by the write mask field 1370 should be a merging or a zeroing.

In the case of the non-memory access 1305 instruction templates of class B, part of the beta field 1354 is interpreted as an RL field 1357A, whose content distinguishes which one of the different augmentation operation types are to be performed (e.g., round 1357A.1 and vector length (VSIZE) 1357A.2 are respectively specified for the no memory access, write mask control, partial round control type operation 1312 instruction template and the no memory access, write mask control, VSIZE type operation 1317 instruction template), while the rest of the beta field 1354 distinguishes which of the operations of the specified type is to be performed. In the no memory access 1305 instruction templates, the scale field 1360, the displacement field 1362A, and the displacement scale filed 1362B are not present.

In the no memory access, write mask control, partial round control type operation 1310 instruction template, the rest of the beta field 1354 is interpreted as a round operation field 1359A and exception event reporting is disabled (a given instruction does not report any kind of floating-point exception flag and does not raise any floating point exception handler).

Round operation control field 1359A - just as round operation control field 1358, its content distinguishes which one of a group of rounding operations to perform (e.g., Round-up, Round-down, Round-towards-zero and Round-to-nearest). Thus, the round operation control field 1359A allows for the changing of the rounding mode on a per instruction basis. In one embodiment of the invention where a processor includes a control register for specifying rounding modes, the round operation control field's 1350 content overrides that register value.

In the no memory access, write mask control, VSIZE type operation 1317 instruction template, the rest of the beta field 1354 is interpreted as a vector length field 1359B, whose content distinguishes which one of a number of data vector lengths is to be performed on (e.g., 128, 256, or 512 byte).

In the case of a memory access 1320 instruction template of class B, part of the beta field 1354 is interpreted as a broadcast field 1357B, whose content distinguishes whether or not the broadcast type data manipulation operation is to be performed, while the rest of the beta field 1354 is interpreted the vector length field 1359B. The memory access 1320 instruction templates include the scale field 1360, and optionally the displacement field 1362A or the displacement scale field 1362B.

With regard to the generic vector friendly instruction format 1300, a full opcode field 1374 is shown including the format field 1340, the base operation field 1342, and the data element width field 1364. While one embodiment is shown where the full opcode field 1374 includes all of these fields, the full opcode field 1374 includes less than all of these fields in embodiments that do not support all of them. The full opcode field 1374 provides the operation code (opcode).

The augmentation operation field 1350, the data element width field 1364, and the write mask field 1370 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

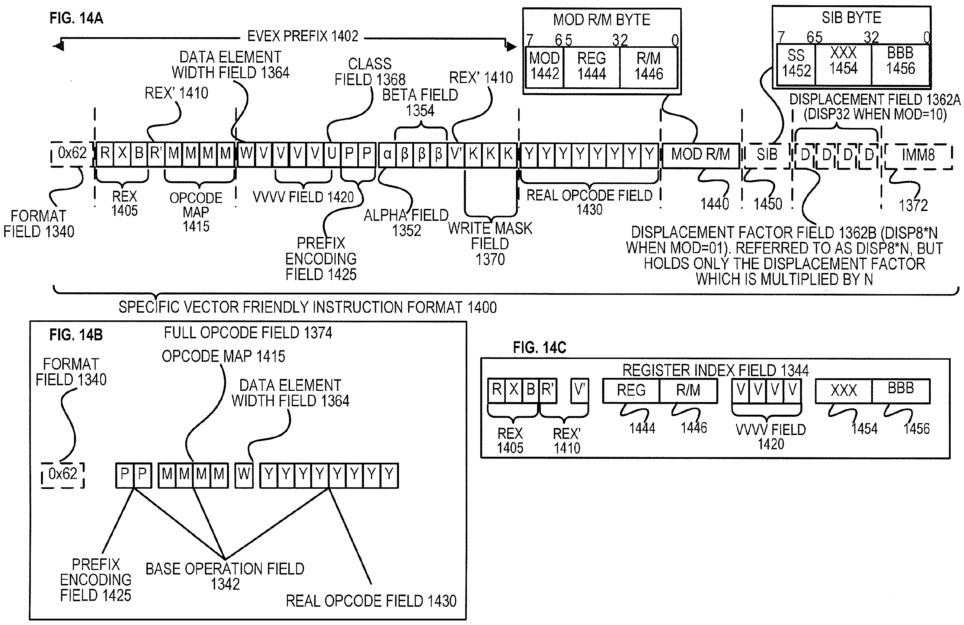

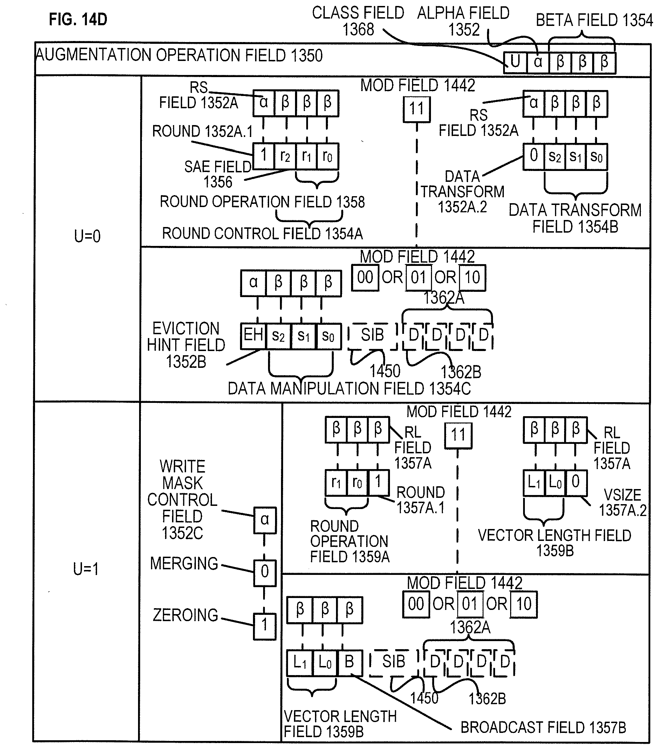

Figure 14 is a block diagram illustrating an exemplary specific vector friendly instruction format according to embodiments of the invention. Figure 14 shows a specific vector friendly instruction format 1400 that is specific in the sense that it specifies the location, size, interpretation, and order of the fields, as well as values for some of those fields. The specific vector friendly instruction format 1400 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from Figure 13 into which the fields from Figure 14 map are illustrated.

It should be understood that, although embodiments of the invention are described with reference to the specific vector friendly instruction format 1400 in the context of the generic vector friendly instruction format 1300 for illustrative purposes, the invention is not limited to the specific vector friendly instruction format 1400 except where claimed. For example, the generic vector friendly instruction format 1300 contemplates a variety of possible sizes for the various fields, while the specific vector friendly instruction format 1400 is shown as having fields of specific sizes. By way of specific example, while the data element width field 1364 is illustrated as a one bit field in the specific vector friendly instruction format 1400, the invention is not so limited (that is, the generic vector friendly instruction format 1300 contemplates other sizes of the data element width field 1364).

The generic vector friendly instruction format 1300 includes the following fields listed below in the order illustrated in Figure 14A.

### EVEX Prefix (Bytes 0-3) 1402 - is encoded in a four-byte form.

Format Field 1340 (EVEX Byte 0, bits [7:0]) - the first byte (EVEX Byte 0) is the format field 1340 and it contains 0x62 (the unique value used for distinguishing the vector friendly instruction format in one embodiment of the invention).

The second-fourth bytes (EVEX Bytes 1-3) include a number of bit fields providing specific capability.

REX field 1405 (EVEX Byte 1, bits [7-5]) - consists of a EVEX.R bit field (EVEX Byte 1, bit [7] - R), EVEX.X bit field (EVEX byte 1, bit [6] - X), and 1357BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1310 - this is the first part of the REX' field 1310 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1415 (EVEX byte 1, bits [3:0] - mmmm) - its content encodes an implied leading opcode byte (0F, 0F 38, or OF 3).

Data element width field 1364 (EVEX byte 2, bit [7] - W) - is represented by the notation EVEX.W. EVEX.W is used to define the granularity (size) of the datatype (either 32-bit data elements or 64-bit data elements).

EVEX.vvvv 1420 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 1420 encodes the 4 low-order bits of the first source register specifier stored in inverted (Is complement) form. Depending on the instruction, an extra different EVEX bit field is used to extend the specifier size to 32 registers.

EVEX.U 1368 Class field (EVEX byte 2, bit [2]-U) - If EVEX.U = 0, it indicates class A or EVEX.U0; if EVEX.U = 1, it indicates class B or EVEX.U1.

Prefix encoding field 1425 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1352 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1354 (EVEX byte 3, bits [6:4]-SSS, also known as EVEX.s₂₋₀, EVEX.r₂₋₀, EVEX.rr1, EVEX.LLO, EVEX.LLB; also illustrated with βββ) - as previously described, this field is context specific.

REX' field 1310 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1370 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1430 (Byte 4) is also known as the opcode byte. Part of the opcode is specified in this field.

MOD R/M Field 1440 (Byte 5) includes MOD field 1442, Reg field 1444, and R/M field 1446. As previously described, the MOD field's 1442 content distinguishes between memory access and non-memory access operations. The role of Reg field 1444 can be summarized to two situations: encoding either the destination register operand or a source register operand, or be treated as an opcode extension and not used to encode any instruction operand. The role of R/M field 1446 may include the following: encoding the instruction operand that references a memory address, or encoding either the destination register operand or a source register operand.

Scale, Index, Base (SIB) Byte (Byte 6) - As previously described, the scale field's 1350 content is used for memory address generation. SIB.xxx 1454 and SIB.bbb 1456 - the contents of these fields have been previously referred to with regard to the register indexes Xxxx and Bbbb.

Displacement field 1362A (Bytes 7-10) - when MOD field 1442 contains 10, bytes 7-10 are the displacement field 1362A, and it works the same as the legacy 32-bit displacement (disp32) and works at byte granularity.

Displacement factor field 1362B (Byte 7) - when MOD field 1442 contains 01, byte 7 is the displacement factor field 1362B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1362B is a reinterpretation of disp8; when using displacement factor field 1362B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1362B substitutes the legacy x86 instruction set 8-bit displacement. Thus, the displacement factor field 1362B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 1372 operates as previously described.

### Full Opcode Field

Figure 14B is a block diagram illustrating the fields of the specific vector friendly instruction format 1400 that make up the full opcode field 1374 according to one embodiment of the invention. Specifically, the full opcode field 1374 includes the format field 1340, the base operation field 1342, and the data element width (W) field 1364. The base operation field 1342 includes the prefix encoding field 1425, the opcode map field 1415, and the real opcode field 1430.

### Register Index Field

Figure 14C is a block diagram illustrating the fields of the specific vector friendly instruction format 1400 that make up the register index field 1344 according to one embodiment of the invention. Specifically, the register index field 1344 includes the REX field 1405, the REX' field 1410, the MODR/M.reg field 1444, the MODR/M.r/m field 1446, the VVVV field 1420, xxx field 1454, and the bbb field 1456.

### Augmentation Operation Field

Figure 14D is a block diagram illustrating the fields of the specific vector friendly instruction format 1400 that make up the augmentation operation field 1350 according to one embodiment of the invention. When the class (U) field 1368 contains 0, it signifies EVEX.U0 (class A 1368A); when it contains 1, it signifies EVEX.U1 (class B 1368B). When U=0 and the MOD field 1442 contains 11 (signifying a no memory access operation), the alpha field 1352 (EVEX byte 3, bit [7] - EH) is interpreted as the rs field 1352A. When the rs field 1352A contains a 1 (round 1352A.1), the beta field 1354 (EVEX byte 3, bits [6:4]- SSS) is interpreted as the round control field 1354A. The round control field 1354A includes a one bit SAE field 1356 and a two bit round operation field 1358. When the rs field 1352A contains a 0 (data transform 1352A.2), the beta field 1354 (EVEX byte 3, bits [6:4]-SSS) is interpreted as a three bit data transform field 1354B. When U=0 and the MOD field 1442 contains 00, 01, or 10 (signifying a memory access operation), the alpha field 1352 (EVEX byte 3, bit [7] - EH) is interpreted as the eviction hint (EH) field 1352B and the beta field 1354 (EVEX byte 3, bits [6:4]- SSS) is interpreted as a three bit data manipulation field 1354C.

When U=1, the alpha field 1352 (EVEX byte 3, bit [7] - EH) is interpreted as the write mask control (Z) field 1352C. When U=1 and the MOD field 1442 contains 11 (signifying a no memory access operation), part of the beta field 1354 (EVEX byte 3, bit [4]- S₀) is interpreted as the RL field 1357A; when it contains a 1 (round 1357A.1) the rest of the beta field 1354 (EVEX byte 3, bit [6-5]- S₂₋₁) is interpreted as the round operation field 1359A, while when the RL field 1357A contains a 0 (VSIZE 1357.A2) the rest of the beta field 1354 (EVEX byte 3, bit [6-5]- S₂₋₁) is interpreted as the vector length field 1359B (EVEX byte 3, bit [6-5]- L₁₋₀). When U=1 and the MOD field 1442 contains 00, 01, or 10 (signifying a memory access operation), the beta field 1354 (EVEX byte 3, bits [6:4]- SSS) is interpreted as the vector length field 1359B (EVEX byte 3, bit [6-5]- L₁₋₀) and the broadcast field 1357B (EVEX byte 3, bit [4]- B).

### Exemplary Register Architecture

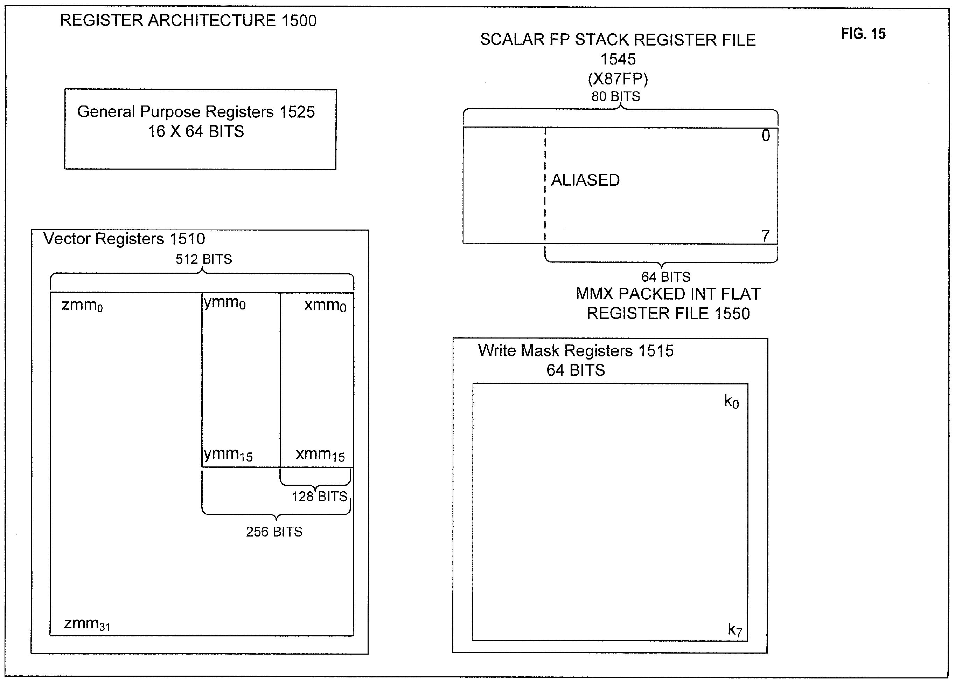

Figure 15 is a block diagram of a register architecture 1500 according to one embodiment of the invention. In the embodiment illustrated, there are 32 vector registers 1510 that are 512 bits wide; these registers are referenced as zmm0 through zmm31. The lower order 256 bits of the lower 16 zmm registers are overlaid on registers ymmO-16. The lower order 128 bits of the lower 16 zmm registers (the lower order 128 bits of the ymm registers) are overlaid on registers xmmO-15. The specific vector friendly instruction format 1400 operates on these overlaid register file as illustrated in the below tables.

| Adjustable Vector Length | Class | Operations | Registers |
|---|---|---|---|
| Instruction Templates that do not include the vector length field 1359B | A (Figure 13A; U=0) | 1310, 1315, 1325, 1330 | zmm registers (the vector length is 64 byte) |
| | B (Figure 13B; U=1) | 1312 | zmm registers (the vector length is 64 byte) |
| Instruction templates that do include the vector length field 1359B | B (Figure 13B; U=1) | 1317, 1327 | zmm, ymm, or xmm registers (the vector length is 64 byte, 32 byte, or 16 byte) depending on the vector length field 1359B |

In other words, the vector length field 1359B selects between a maximum length and one or more other shorter lengths, where each such shorter length is half the length of the preceding length; and instructions templates without the vector length field 1359B operate on the maximum vector length. Further, in one embodiment, the class B instruction templates of the specific vector friendly instruction format 1400 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1515 - in the embodiment illustrated, there are 8 write mask registers (k0 through k7), each 64 bits in size. In an alternate embodiment, the write mask registers 1515 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1525 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1545, on which is aliased the MMX packed integer flat register file 1550 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

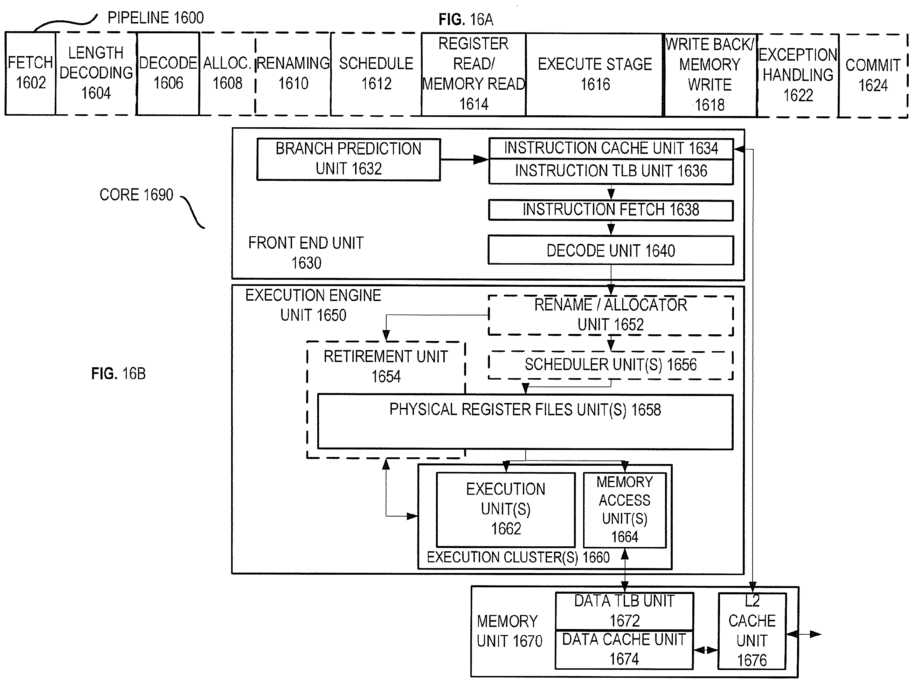

Figure 16A is a block diagram illustrating both an exemplary in-order pipeline and an exemplary register renaming, out-of-order issue/execution pipeline according to embodiments of the invention. Figure 16B is a block diagram illustrating both an exemplary embodiment of an in-order architecture core and an exemplary register renaming, out-of-order issue/execution architecture core to be included in a processor according to embodiments of the invention. The solid lined boxes in Figures 16A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 16A, a processor pipeline 1600 includes a fetch stage 1602, a length decode stage 1604, a decode stage 1606, an allocation stage 1608, a renaming stage 1610, a scheduling (also known as a dispatch or issue) stage 1612, a register read/memory read stage 1614, an execute stage 1616, a write back/memory write stage 1618, an exception handling stage 1622, and a commit stage 1624.

Figure 16B shows processor core 1690 including a front end unit 1630 coupled to an execution engine unit 1650, and both are coupled to a memory unit 1670. The core 1690 may be a reduced instruction set computing (RISC) core, a complex instruction set computing (CISC) core, a very long instruction word (VLIW) core, or a hybrid or alternative core type. As yet another option, the core 1690 may be a special-purpose core, such as, for example, a network or communication core, compression engine, coprocessor core, general purpose computing graphics processing unit (GPGPU) core, graphics core, or the like.

The front end unit 1630 includes a branch prediction unit 1632 coupled to an instruction cache unit 1634, which is coupled to an instruction translation lookaside buffer (TLB) 1636, which is coupled to an instruction fetch unit 1638, which is coupled to a decode unit 1640. The decode unit 1640 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1640 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1690 includes a microcode ROM or other medium that stores microcode for certain macroinstructions (e.g., in decode unit 1640 or otherwise within the front end unit 1630). The decode unit 1640 is coupled to a rename/allocator unit 1652 in the execution engine unit 1650.

The execution engine unit 1650 includes the rename/allocator unit 1652 coupled to a retirement unit 1654 and a set of one or more scheduler unit(s) 1656. The scheduler unit(s) 1656 represents any number of different schedulers, including reservations stations, central instruction window, etc. The scheduler unit(s) 1656 is coupled to the physical register file(s) unit(s) 1658. Each of the physical register file(s) units 1658 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 1658 comprises a vector registers unit, a write mask registers unit, and a scalar registers unit. These register units may provide architectural vector registers, vector mask registers, and general purpose registers. The physical register file(s) unit(s) 1658 is overlapped by the retirement unit 1654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1654 and the physical register file(s) unit(s) 1658 are coupled to the execution cluster(s) 1660. The execution cluster(s) 1660 includes a set of one or more execution units 1662 and a set of one or more memory access units 1664. The execution units 1662 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1656, physical register file(s) unit(s) 1658, and execution cluster(s) 1660 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1664). It should also be understood that where separate pipelines are used, one or more of these pipelines may be out-of-order issue/execution and the rest in-order.

The set of memory access units 1664 is coupled to the memory unit 1670, which includes a data TLB unit 1672 coupled to a data cache unit 1674 coupled to a level 2 (L2) cache unit 1676. In one exemplary embodiment, the memory access units 1664 may include a load unit, a store address unit, and a store data unit, each of which is coupled to the data TLB unit 1672 in the memory unit 1670. The instruction cache unit 1634 is further coupled to a level 2 (L2) cache unit 1676 in the memory unit 1670. The L2 cache unit 1676 is coupled to one or more other levels of cache and eventually to a main memory.

By way of example, the exemplary register renaming, out-of-order issue/execution core architecture may implement the pipeline 1600 as follows: 1) the instruction fetch 1638 performs the fetch and length decoding stages 1602 and 1604; 2) the decode unit 1640 performs the decode stage 1606; 3) the rename/allocator unit 1652 performs the allocation stage 1608 and renaming stage 1610; 4) the scheduler unit(s) 1656 performs the schedule stage 1612; 5) the physical register file(s) unit(s) 1658 and the memory unit 1670 perform the register read/memory read stage 1614; the execution cluster 1660 perform the execute stage 1616; 6) the memory unit 1670 and the physical register file(s) unit(s) 1658 perform the write back/memory write stage 1618; 7) various units may be involved in the exception handling stage 1622; and 8) the retirement unit 1654 and the physical register file(s) unit(s) 1658 perform the commit stage 1624.

The core 1690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1690 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1634/1674 and a shared L2 cache unit 1676, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

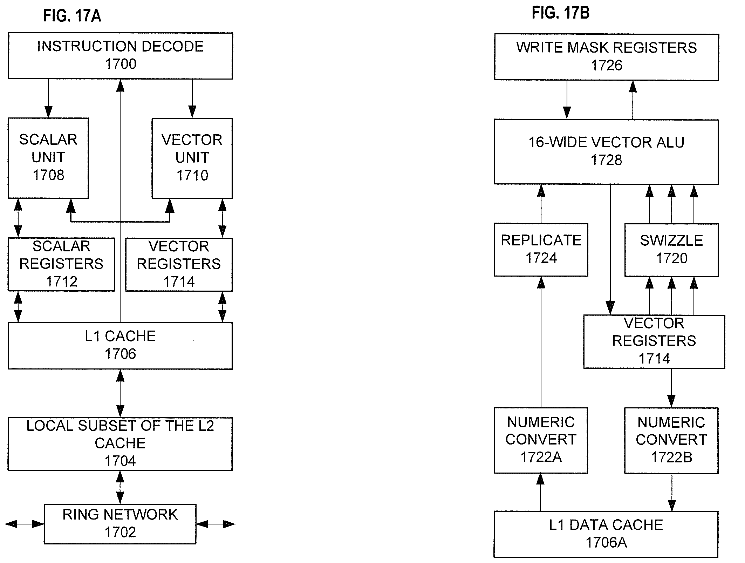

Figures 17A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 17A is a block diagram of a single processor core, along with its connection to the on-die interconnect network 1702 and with its local subset of the Level 2 (L2) cache 1704, according to embodiments of the invention. In one embodiment, an instruction decoder 1700 supports the x86 instruction set with a packed data instruction set extension. An L1 cache 1706 allows low-latency accesses to cache memory into the scalar and vector units. While in one embodiment (to simplify the design), a scalar unit 1708 and a vector unit 1710 use separate register sets (respectively, scalar registers 1712 and vector registers 1714) and data transferred between them is written to memory and then read back in from a level 1 (L1) cache 1706, alternative embodiments of the invention may use a different approach (e.g., use a single register set or include a communication path that allow data to be transferred between the two register files without being written and read back).

The local subset of the L2 cache 1704 is part of a global L2 cache that is divided into separate local subsets, one per processor core. Each processor core has a direct access path to its own local subset of the L2 cache 1704. Data read by a processor core is stored in its L2 cache subset 1704 and can be accessed quickly, in parallel with other processor cores accessing their own local L2 cache subsets. Data written by a processor core is stored in its own L2 cache subset 1704 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 17B is an expanded view of part of the processor core in Figure 17A according to embodiments of the invention. Figure 17B includes an L1 data cache 1706A part of the L1 cache 1704, as well as more detail regarding the vector unit 1710 and the vector registers 1714. Specifically, the vector unit 1710 is a 16-wide vector processing unit (VPU) (see the 16-wide ALU 1728), which executes one or more of integer, single-precision float, and double-precision float instructions. The VPU supports swizzling the register inputs with swizzle unit 1720, numeric conversion with numeric convert units 1722A-B, and replication with replication unit 1724 on the memory input. Write mask registers 1726 allow predicating resulting vector writes.

### Processor with integrated memory controller and graphics

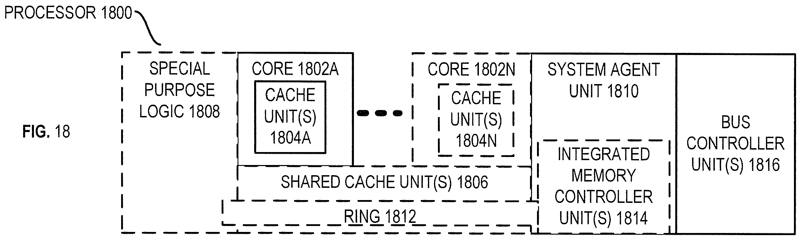

Figure 18 is a block diagram of a processor 1800 that may have more than one core, may have an integrated memory controller, and may have integrated graphics according to embodiments of the invention. The solid lined boxes in Figure 18 illustrate a processor 1800 with a single core 1802A, a system agent 1810, a set of one or more bus controller units 1816, while the optional addition of the dashed lined boxes illustrates an alternative processor 1800 with multiple cores 1802A-N, a set of one or more integrated memory controller unit(s) 1814 in the system agent unit 1810, and special purpose logic 1808.

Thus, different implementations of the processor 1800 may include: 1) a CPU with the special purpose logic 1808 being integrated graphics and/or scientific (throughput) logic (which may include one or more cores), and the cores 1802A-N being one or more general purpose cores (e.g., general purpose in-order cores, general purpose out-of-order cores, a combination of the two); 2) a coprocessor with the cores 1802A-N being a large number of special purpose cores intended primarily for graphics and/or scientific (throughput); and 3) a coprocessor with the cores 1802A-N being a large number of general purpose in-order cores. Thus, the processor 1800 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1800 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1806, and external memory (not shown) coupled to the set of integrated memory controller units 1814. The set of shared cache units 1806 may include one or more mid-level caches, such as level 2 (L2), level 3 (L3), level 4 (L4), or other levels of cache, a last level cache (LLC), and/or combinations thereof. While in one embodiment a ring based interconnect unit 1812 interconnects the integrated graphics logic 1808, the set of shared cache units 1806, and the system agent unit 1810/integrated memory controller unit(s) 1814, alternative embodiments may use any number of well-known techniques for interconnecting such units. In one embodiment, coherency is maintained between one or more cache units 1806 and cores 1802-A-N.

In some embodiments, one or more of the cores 1802A-N are capable of multi-threading. The system agent 1810 includes those components coordinating and operating cores 1802A-N. The system agent unit 1810 may include for example a power control unit (PCU) and a display unit. The PCU may be or include logic and components needed for regulating the power state of the cores 1802A-N and the integrated graphics logic 1808. The display unit is for driving one or more externally connected displays.

The cores 1802A-N may be homogenous or heterogeneous in terms of architecture instruction set; that is, two or more of the cores 1802A-N may be capable of execution the same instruction set, while others may be capable of executing only a subset of that instruction set or a different instruction set.

### Exemplary Computer Architectures

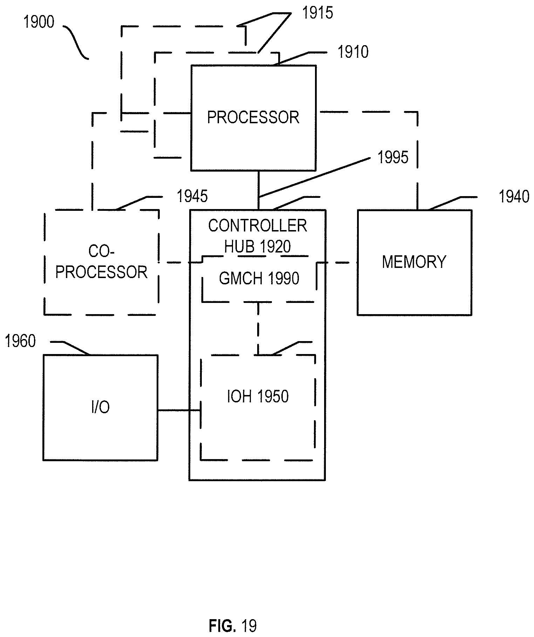

Figures 19-22 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to Figure 19, shown is a block diagram of a system 1900 in accordance with one embodiment of the present invention. The system 1900 may include one or more processors 1910, 1915, which are coupled to a controller hub 1920. In one embodiment the controller hub 1920 includes a graphics memory controller hub (GMCH) 1990 and an Input/Output Hub (IOH) 1950 (which may be on separate chips); the GMCH 1990 includes memory and graphics controllers to which are coupled memory 1940 and a coprocessor 1945; the IOH 1950 is couples input/output (I/O) devices 1960 to the GMCH 1990. Alternatively, one or both of the memory and graphics controllers are integrated within the processor (as described herein), the memory 1940 and the coprocessor 1945 are coupled directly to the processor 1910, and the controller hub 1920 in a single chip with the IOH 1950.

The optional nature of additional processors 1915 is denoted in Figure 19 with broken lines. Each processor 1910, 1915 may include one or more of the processing cores described herein and may be some version of the processor 1800.

The memory 1940 may be, for example, dynamic random access memory (DRAM), phase change memory (PCM), or a combination of the two. For at least one embodiment, the controller hub 1920 communicates with the processor(s) 1910, 1915 via a multi-drop bus, such as a frontside bus (FSB), point-to-point interface such as QuickPath Interconnect (QPI), or similar connection 1995.

In one embodiment, the coprocessor 1945 is a special-purpose processor, such as, for example, a high-throughput MIC processor, a network or communication processor, compression engine, graphics processor, GPGPU, embedded processor, or the like. In one embodiment, controller hub 1920 may include an integrated graphics accelerator.

There can be a variety of differences between the physical resources 1910, 1915 in terms of a spectrum of metrics of merit including architectural, microarchitectural, thermal, power consumption characteristics, and the like.

In one embodiment, the processor 1910 executes instructions that control data processing operations of a general type. Embedded within the instructions may be coprocessor instructions. The processor 1910 recognizes these coprocessor instructions as being of a type that should be executed by the attached coprocessor 1945. Accordingly, the processor 1910 issues these coprocessor instructions (or control signals representing coprocessor instructions) on a coprocessor bus or other interconnect, to coprocessor 1945. Coprocessor(s) 1945 accept and execute the received coprocessor instructions.

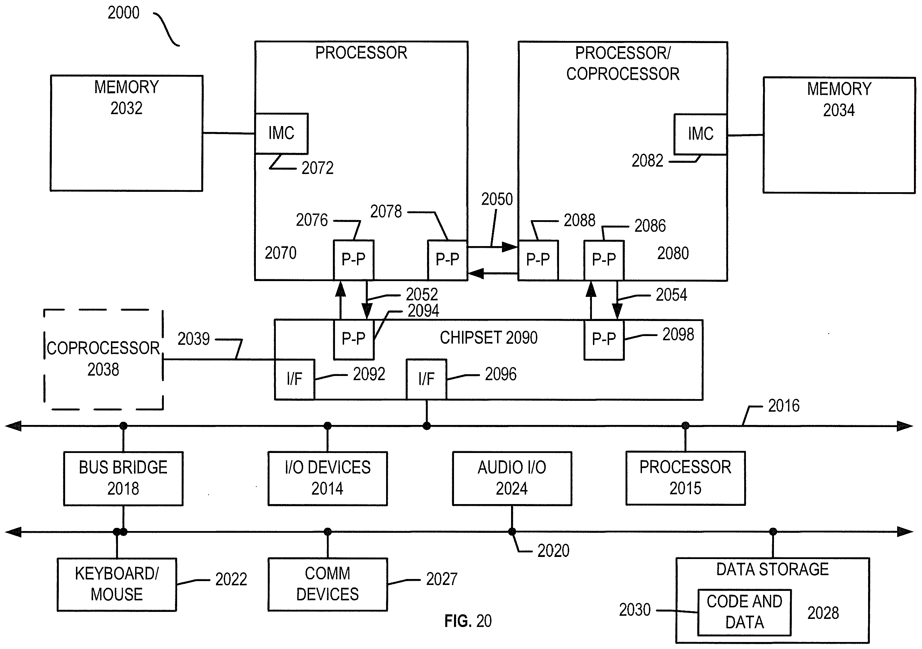

Referring now to Figure 20, shown is a block diagram of a first more specific exemplary system 2000 in accordance with an embodiment of the present invention. As shown in Figure 20, multiprocessor system 2000 is a point-to-point interconnect system, and includes a first processor 2070 and a second processor 2080 coupled via a point-to-point interconnect 2050. Each of processors 2070 and 2080 may be some version of the processor 1800. In one embodiment of the invention, processors 2070 and 2080 are respectively processors 1910 and 1915, while coprocessor 2038 is coprocessor 1945. In another embodiment, processors 2070 and 2080 are respectively processor 1910 coprocessor 1945.

Processors 2070 and 2080 are shown including integrated memory controller (IMC) units 2072 and 2082, respectively. Processor 2070 also includes as part of its bus controller units point-to-point (P-P) interfaces 2076 and 2078; similarly, second processor 2080 includes P-P interfaces 2086 and 2088. Processors 2070, 2080 may exchange information via a point-to-point (P-P) interface 2050 using P-P interface circuits 2078, 2088. As shown in Figure 20, IMCs 2072 and 2082 couple the processors to respective memories, namely a memory 2032 and a memory 2034, which may be portions of main memory locally attached to the respective processors.

Processors 2070, 2080 may each exchange information with a chipset 2090 via individual P-P interfaces 2052, 2054 using point to point interface circuits 2076, 2094, 2086, 2098. Chipset 2090 may optionally exchange information with the coprocessor 2038 via a high-performance interface 2039. In one embodiment, the coprocessor 2038 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2090 may be coupled to a first bus 2016 via an interface 2096. In one embodiment, first bus 2016 may be a Peripheral Component Interconnect (PCI) bus, or a bus such as a PCI Express bus or another third generation I/O interconnect bus, although the scope of the present invention is not so limited.

As shown in Figure 20, various I/O devices 2014 may be coupled to first bus 2016, along with a bus bridge 2018 which couples first bus 2016 to a second bus 2020. In one embodiment, one or more additional processor(s) 2015, such as coprocessors, high-throughput MIC processors, GPGPU's, accelerators (such as, e.g., graphics accelerators or digital signal processing (DSP) units), field programmable gate arrays, or any other processor, are coupled to first bus 2016. In one embodiment, second bus 2020 may be a low pin count (LPC) bus. Various devices may be coupled to a second bus 2020 including, for example, a keyboard and/or mouse 2022, communication devices 2027 and a storage unit 2028 such as a disk drive or other mass storage device which may include instructions/code and data 2030, in one embodiment. Further, an audio I/O 2024 may be coupled to the second bus 2020. Note that other architectures are possible. For example, instead of the point-to-point architecture of Figure 20, a system may implement a multi-drop bus or other such architecture.

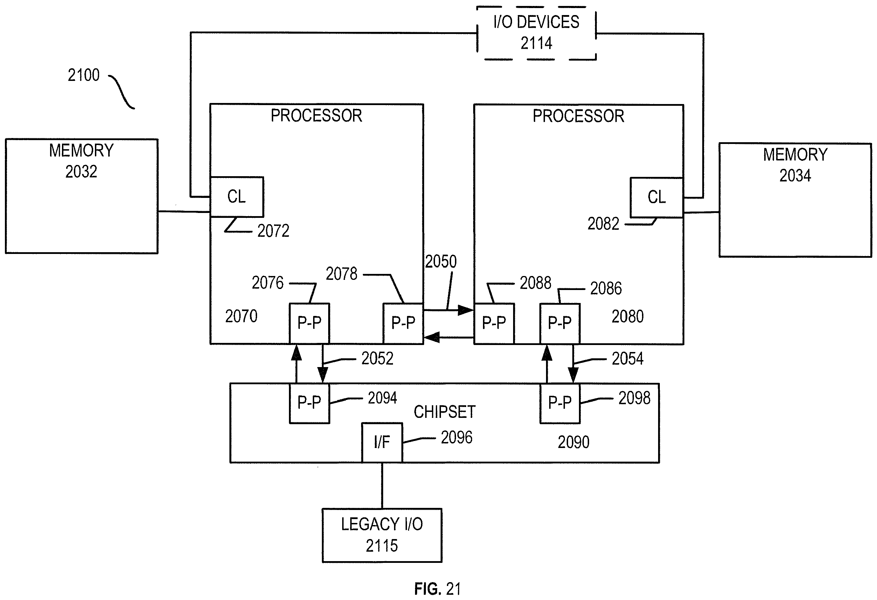

Referring now to Figure 21, shown is a block diagram of a second more specific exemplary system 2100 in accordance with an embodiment of the present invention. Like elements in Figures 20 and 21 bear like reference numerals, and certain aspects of Figure 20 have been omitted from Figure 21 in order to avoid obscuring other aspects of Figure 21.

Figure 21 illustrates that the processors 2070, 2080 may include integrated memory and I/O control logic ("CL") 2072 and 2082, respectively. Thus, the CL 2072, 2082 include integrated memory controller units and include I/O control logic. Figure 21 illustrates that not only are the memories 2032, 2034 coupled to the CL 2072, 2082, but also that I/O devices 2114 are also coupled to the control logic 2072, 2082. Legacy I/O devices 2115 are coupled to the chipset 2090.

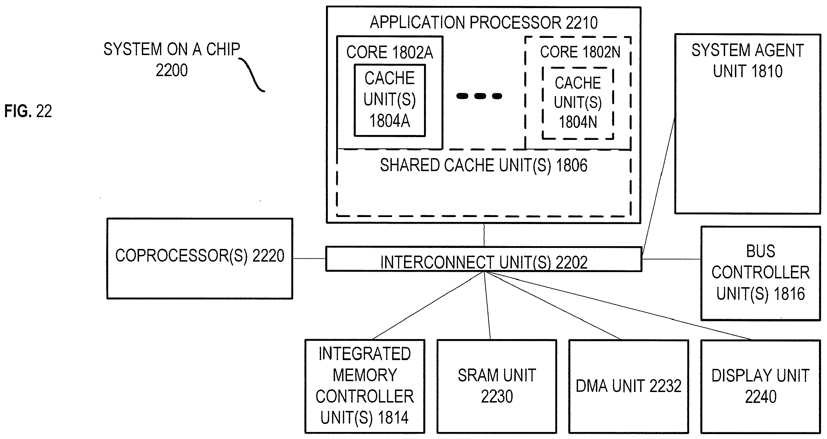

Referring now to Figure 22, shown is a block diagram of a SoC 2200 in accordance with an embodiment of the present invention. Similar elements in Figure 18 bear like reference numerals. Also, dashed lined boxes are optional features on more advanced SoCs. In Figure 22, an interconnect unit(s) 2202 is coupled to: an application processor 2210 which includes a set of one or more cores 202A-N and shared cache unit(s) 1806; a system agent unit 1810; a bus controller unit(s) 1816; an integrated memory controller unit(s) 1814; a set or one or more coprocessors 2220 which may include integrated graphics logic, an image processor, an audio processor, and a video processor; an static random access memory (SRAM) unit 2230; a direct memory access (DMA) unit 2232; and a display unit 2240 for coupling to one or more external displays. In one embodiment, the coprocessor(s) 2220 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 2030 illustrated in Figure 20, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

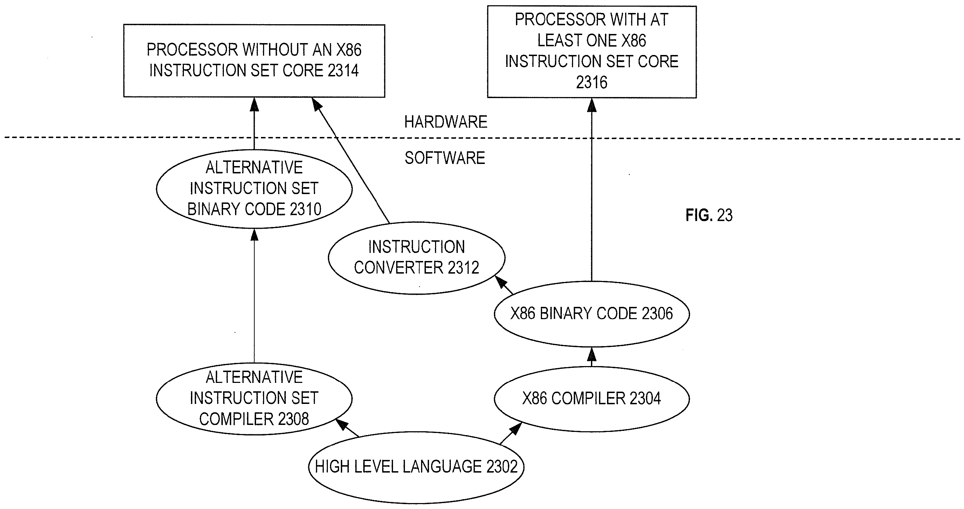

Figure 23 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 23 shows a program in a high level language 2302 may be compiled using an x86 compiler 2304 to generate x86 binary code 2306 that may be natively executed by a processor with at least one x86 instruction set core 2316. The processor with at least one x86 instruction set core 2316 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2304 represents a compiler that is operable to generate x86 binary code 2306 (e.g., object code) that can, with or without additional linkage processing, be executed on the processor with at least one x86 instruction set core 2316. Similarly, Figure 23 shows the program in the high level language 2302 may be compiled using an alternative instruction set compiler 2308 to generate alternative instruction set binary code 2310 that may be natively executed by a processor without at least one x86 instruction set core 2314 (e.g., a processor with cores that execute the MIPS instruction set of MIPS Technologies of Sunnyvale, CA and/or that execute the ARM instruction set of ARM Holdings of Sunnyvale, CA). The instruction converter 2312 is used to convert the x86 binary code 2306 into code that may be natively executed by the processor without an x86 instruction set core 2314. This converted code is not likely to be the same as the alternative instruction set binary code 2310 because an instruction converter capable of this is difficult to make; however, the converted code will accomplish the general operation and be made up of instructions from the alternative instruction set. Thus, the instruction converter 2312 represents software, firmware, hardware, or a combination thereof that, through emulation, simulation or any other process, allows a processor or other electronic device that does not have an x86 instruction set processor or core to execute the x86 binary code 2306.

In the description and claims, the terms "coupled" and/or "connected," along with their derivatives, have be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. For example, an execution unit may be coupled with a register or a decoder through one or more intervening components. In the figures, arrows are used to show couplings and/or connections.

In the description and claims, the term "logic" may have been used. As used herein, the term logic may include hardware, firmware, software, or various combinations thereof. Examples of logic include integrated circuitry, application specific integrated circuits, analog circuits, digital circuits, programmed logic devices, memory devices including instructions, etc. In some embodiments, the logic may include transistors and/or gates potentially along with other circuitry components.

In the description above, specific details have been set forth in order to provide a thorough understanding of the embodiments. However, other embodiments may be practiced without some of these specific details. The scope of the invention is not to be determined by the specific examples provided above but only by the claims below. All equivalent relationships to those illustrated in the drawings and described in the specification are encompassed within embodiments. In other instances, well-known circuits, structures, devices, and operations have been shown in block diagram form or without detail in order to avoid obscuring the understanding of the description. Where multiple components have been shown and described, in some cases these multiple components may be incorporated into one component. Where a single component has been shown and described, in some cases this single component may be separated into two or more components.

Certain methods disclosed herein have been shown and described in a basic form, although operations may optionally be added to and/or removed from the methods. In addition, a particular order of the operations may have been shown and/or described, although alternate embodiments may perform certain operations in different order, combine certain operations, overlap certain operations, etc.

Certain operations may be performed by hardware components and/or may be embodied in a machine-executable or circuit-executable instruction that may be used to cause and/or result in a hardware component (e.g., a processor, potion of a processor, circuit, etc.) programmed with the instruction performing the operations. The hardware component may include a general-purpose or special-purpose hardware component. The operations may be performed by a combination of hardware, software, and/or firmware. The hardware component may include specific or particular logic (e.g., circuitry potentially combined with software and/or firmware) that is operable to execute and/or process the instruction and store a result in response to the instruction (e.g., in response to one or more microinstructions or other control signals derived from the instruction).

Reference throughout this specification to "one embodiment," "an embodiment," "one or more embodiments," "some embodiments," for example, indicates that a particular feature may be included in the practice of the invention but is not necessarily required to be. Similarly, in the description various features are sometimes grouped together in a single embodiment, Figure, or description thereof for the purpose of streamlining the disclosure and aiding in the understanding of various inventive aspects. This method of disclosure, however, is not to be interpreted as reflecting an intention that the invention requires more features than are expressly recited in each claim.

## Claims

1. A method (318), performed in a processor (100, 200), the method comprising:
receiving (319), at the processor, a single source unique packed data element identification instruction (204), the single source unique packed data element identification instruction indicating a single source packed data (213) having a plurality of packed data elements and indicating a destination storage location (216); and
storing (320), with the processor, a unique packed data element identification result (217) in the destination storage location in response to the single source unique packed data element identification instruction, the unique packed data element identification result indicating which of the plurality of the packed data elements are unique in the single source packed data, wherein storing comprises storing a single bit in the result (417A) for each corresponding data element of the single source packed data (413B).

2. The method of claim 1, wherein each single bit has one of: (1) a first binary value to indicate that the corresponding data element is unique in the single source packed data; and (2) a second binary value to indicate that the corresponding data element is not unique in the single source packed data.

3. The method of claim 1, wherein storing comprises storing the result in a packed data operation mask register (1009).

4. The method of claim 1, further comprising performing a masked packed data operation (535) on a subset of the data elements of the single source packed data, wherein the subset includes all of the data elements of the single source packed data that are indicated to be unique in the result.

5. The method of claim 4, wherein performing the masked packed data operation comprises one of using the result as a packed data operation mask and using a packed data operation mask derived from the result.

6. The method of claim 1, wherein storing comprises storing a result that does not indicate which of the data elements each of the non-unique data elements are equal to.

7. The method of claim 1, wherein receiving comprises receiving the instruction indicating the single source packed data having at least sixteen packed data elements (842-1), and wherein storing comprises storing the result indicating which of the sixteen data elements are unique in the single source packed data.

8. A processor (100, 200) comprising:
a packed data register (212); and
an execution unit (210) coupled with the packed data register, the execution unit operable, in response to a single source unique packed data element identification instruction (204) being decoded, the single source unique packed data element identification instruction to indicate the packed data register that is adapted to have a source packed data (213) including a plurality of packed data elements, and to indicate a destination storage location (216), to store a unique packed data element identification result (217) in the destination storage location, the unique packed data element identification result to indicate which of the plurality of the packed data elements are unique in the source packed data, wherein the execution unit, in response to the instruction being decoded, is to store a single bit in the result (417B) for each corresponding data element of the source packed data (413B).

9. The processor of claim 8, wherein each single bit has one of: (1) a first binary value to indicate that the corresponding data element is unique in the source packed data; and (2) a second binary value to indicate that the corresponding data element is not unique in the source packed data.

10. The processor of claim 8, wherein the execution unit, in response to the instruction, is to store the result in a packed data operation mask register (1009).

11. The processor of claim 8, further comprising logic to perform a masked packed data operation (535) on a subset of the data elements of the source packed data, wherein the subset is to include all of the data elements of the source packed data indicated to be unique in the result.

12. The processor of claim 11, wherein the logic to perform the masked packed data operation is to use one of (a) the result as a packed data operation mask and (b) a packed data operation mask that is to be derived from the result.

13. A processor (100) comprising:
a first packed data register (208);
a second packed data register (208); and
an execution unit (210) coupled with the first and second packed data registers, the execution unit to receive a two source unique inter-packed data element identification instruction (106), the instruction to indicate the first packed data register, the second packed data register, and a destination storage location, the first packed data register to have a first source packed data (739A) including a first plurality of packed data elements, the second packed data register to have a second source packed data (740A) including a second plurality of packed data elements, the execution unit operable, in response to the instruction, to store a unique packed data element identification result (741A) in the destination storage location, the unique packed data element identification result to indicate which of the first plurality of the packed data elements of the first source packed data are unique in the second plurality of the packed data elements of the second source packed data, wherein the execution unit is to store a single bit in the unique packed data element identification result for each corresponding data element of the first source packed data, and wherein each single bit to have one of a first binary value to indicate that the corresponding data element of the first source packed data is unique in the second source packed data, and a second binary value to indicate that the corresponding data element of the first source packed data is not unique in the second source packed data.

14. A non-transitory machine-readable storage medium (1245) that stores an instruction (1204) that if executed by a machine comprising a processor according to any of claims 8-13, is operable to cause the machine to perform the method of any one of claims 1 to 7.

## Patentansprüche

1. Verfahren (318), das in einem Prozessor (100, 200) durchgeführt wird, wobei das Verfahren Folgendes umfasst:
Empfangen (319) einer Identifizierungsanweisung (204) für eindeutige, gepackte Datenelemente einer einzigen Quelle bei dem Prozessor, wobei die Identifizierungsanweisung für eindeutige, gepackte Datenelemente einer einzigen Quelle gepackte Daten (213) einer einzigen Quelle angibt, die mehrere gepackte Datenelemente aufweisen, und einen Zielspeicherort (216) angibt; und
Speichern (320) eines Identifizierungsergebnisses (217) für eindeutige, gepackte Datenelemente im Zielspeicherort als Antwort auf die Identifizierungsanweisung für eindeutige, gepackte Datenelemente einer einzigen Quelle mit dem Prozessor, wobei das Identifizierungsergebnis für eindeutige, gepackte Datenelemente angibt, welche der mehreren gepackten Datenelemente in den gepackten Daten einer einzigen Quelle eindeutig sind, wobei das Speichern das Speichern eines einzigen Bits im Ergebnis (417A) für jedes entsprechende Datenelement der gepackten Daten (413B) einer einzigen Quelle umfasst.

2. Verfahren nach Anspruch 1, wobei jedes einzelne Bit eines der Folgenden aufweist: (1) einen ersten binären Wert, um anzugeben, dass das entsprechende Datenelement in den gepackten Daten einer einzigen Quelle eindeutig ist; und (2) einen zweiten binären Wert, um anzugeben, dass das entsprechende Datenelement in den gepackten Daten einer einzigen Quelle nicht eindeutig ist.

3. Verfahren nach Anspruch 1, wobei das Speichern das Speichern des Ergebnisses in einem Vorgangsmaskenregister (1009) für gepackte Daten umfasst.

4. Verfahren nach Anspruch 1, das ferner das Durchführen eines Vorgangs (535) für maskierte, gepackte Daten auf einer Teilmenge der Datenelemente der gepackten Daten einer einzigen Quelle umfasst, wobei die Teilmenge all jene der Datenelemente der gepackten Daten einer einzigen Quelle enthält, für die im Ergebnis angegeben ist, dass sie eindeutig sind.

5. Verfahren nach Anspruch 4, wobei das Durchführen des Vorgangs für maskierte, gepackte Daten entweder das Verwenden des Ergebnisses als eine Maske des Vorgangs für gepackte Daten oder das Verwenden einer Maske des Vorgangs für gepackte Daten, die aus dem Ergebnis abgeleitet ist, umfasst.

6. Verfahren nach Anspruch 1, wobei das Speichern das Speichern eines Ergebnisses, das nicht angibt, welchem der Datenelemente jedes der nicht eindeutigen Datenelemente gleich ist, umfasst.

7. Verfahren nach Anspruch 1, wobei das Empfangen das Empfangen der Anweisung, die angibt, dass die gepackten Daten einer einzigen Quelle mindestens sechzehn gepackte Datenelemente (842-1) aufweisen, umfasst und wobei das Speichern das Speichern des Ergebnisses, das angibt, welche der sechzehn Datenelemente in den gepackten Daten einer einzigen Quelle eindeutig sind, umfasst.

8. Prozessor (100, 200), der Folgendes umfasst:
ein Register (212) für gepackte Daten; und
eine Ausführungseinheit (210), die mit dem Register für gepackte Daten gekoppelt ist, wobei die Ausführungseinheit betreibbar ist, als Antwort darauf, dass eine Identifizierungsanweisung (204) für eindeutige, gepackte Datenelemente einer einzigen Quelle decodiert wird, wobei die Identifizierungsanweisung für eindeutige, gepackte Datenelemente einer einzigen Quelle dazu dient, das Register für gepackte Daten anzugeben, das ausgelegt ist, gepackte Quellenddaten (213) aufzuweisen, die mehrere gepackte Datenelemente enthalten, und einen Zielspeicherort (216) anzugeben, ein Identifizierungsergebnis (217) für eindeutige, gepackte Datenelemente im Zielspeicherort zu speichern, wobei das Identifizierungsergebnis für eindeutige, gepackte Datenelemente dazu dient anzugeben, welche der mehreren der gepackten Datenelemente in den gepackten Quellendaten eindeutig sind, wobei die Ausführungseinheit als Antwort darauf, dass die Anweisung decodiert wird, dazu dient, in dem Ergebnis ein einziges Bit (417B) für jedes entsprechende Datenelement der gepackten Quellendaten (413B) zu speichern.

9. Prozessor nach Anspruch 8, wobei jedes einzelne Bit eines der Folgenden aufweist: (1) einen ersten binären Wert, um anzugeben, dass das entsprechende Datenelement in den gepackten Quellendaten eindeutig ist; und (2) einen zweiten binären Wert, um anzugeben, dass das entsprechende Datenelement in den gepackten Quellendaten nicht eindeutig ist.

10. Prozessor nach Anspruch 8, wobei die Ausführungseinheit als Antwort auf die Anweisung dazu dient, das Ergebnis in einem Vorgangsmaskenregister (1009) für gepackte Daten zu speichern.

11. Prozessor nach Anspruch 8, der ferner eine Logik, um auf einer Teilmenge der Datenelemente der gepackten Quellendaten einen Vorgang (535) für maskierte, gepackte Daten durchzuführen, umfasst, wobei die Teilmenge dazu dient, all jene der Datenelemente der gepackten Quellendaten zu enthalten, für die im Ergebnis angegeben ist, dass sie eindeutig sind.

12. Prozessor nach Anspruch 11, wobei die Logik, um den Vorgang für maskierte, gepackte Daten durchzuführen, darin besteht, entweder (a) das Ergebnis als eine Maske des Vorgangs für gepackte Daten oder (b) eine Maske des Vorgangs für gepackte Daten, die aus dem Ergebnis abzuleiten ist, zu verwenden.

13. Prozessor (100), der Folgendes umfasst:
ein erstes Register (208) für gepackte Daten;
ein zweites Register (208) für gepackte Daten; und
eine Ausführungseinheit (210), die mit dem ersten und dem zweiten Register für gepackte Daten gekoppelt ist, wobei die Ausführungseinheit dazu dient, eine Identifizierungsanweisung (106) für eindeutige, zwischengepackte Datenelemente zweier Quellen zu empfangen, wobei die Anweisung dazu dient, das erste Register für gepackte Daten, das zweite Register für gepackte Daten und einen Zielspeicherort anzugeben, wobei das erste Register für gepackte Daten dazu dient, gepackte Daten (739A) einer ersten Quelle aufzuweisen, die eine erste Mehrzahl gepackter Datenelemente enthalten, das zweite Register für gepackte Daten dazu dient, gepackte Daten (740A) einer zweiten Quelle aufzuweisen, die eine zweite Mehrzahl gepackter Datenelemente enthalten, wobei die Ausführungseinheit betreibbar ist, als Antwort auf die Anweisung ein Identifizierungsergebnis (741A) für eindeutige, gepackte Datenelemente im Zielspeicherort zu speichern, wobei das Identifizierungsergebnis für eindeutige, gepackte Datenelemente dazu dient anzugeben, welche der ersten Mehrzahl der gepackten Datenelemente der gepackten Daten der ersten Quelle in der zweiten Mehrzahl der gepackten Datenelemente der gepackten Daten der zweiten Quelle eindeutig sind, wobei die Ausführungseinheit dazu dient, im Identifizierungsergebnis für eindeutige, gepackte Datenelemente ein einziges Bit für jedes entsprechende Datenelement der gepackten Daten der ersten Quelle zu speichern, und wobei jedes einzelne Bit dazu dient, entweder einen ersten binären Wert, um anzugeben, dass das entsprechende Datenelement der gepackten Daten der ersten Quelle in den gepackten Daten der zweiten Quelle eindeutig ist, oder einen zweiten binären Wert, um anzugeben, dass das entsprechende Datenelement der gepackten Daten der ersten Quelle in den gepackten Daten der zweiten Quelle nicht eindeutig ist, aufzuweisen.

14. Nichtflüchtiges, maschinenlesbares Speichermedium (1245), auf dem eine Anweisung (1204) gespeichert ist, die dann, wenn sie durch eine Maschine ausgeführt wird, die einen Prozessor nach einem der Ansprüche 8-13 umfasst, betreibbar ist zu bewirken, dass die Maschine das Verfahren nach einem der Ansprüche 1 bis 7 durchführt.

## Revendications

1. Procédé (318), exécuté dans un processeur (100, 200), le procédé comprenant :
la réception (319), au niveau du processeur, d'une instruction d'identification d'un élément de données condensées unique à source unique (204), l'instruction d'identification d'un élément de données condensées unique à source unique indiquant une donnée condensée à source unique (213) ayant une pluralité d'éléments de données condensées et indiquant un emplacement de stockage de destination (216) ; et
le stockage (320), avec le processeur, d'un résultat d'identification de l'élément de données condensées unique (217) dans l'emplacement de stockage de destination en réponse à l'instruction d'identification d'élément de données condensées unique à source unique, le résultat de l'identification de l'élément de données condensées unique indiquant lesquels de la pluralité des éléments de données condensées sont uniques dans les données condensées à source unique, dans lequel le stockage comprend le stockage d'un seul bit dans le résultat (417A) pour chaque élément de données correspondant des données condensées à source unique (413B).

2. Procédé selon la revendication 1, dans lequel chaque bit unique a une des valeurs suivantes : (1) une première valeur binaire pour indiquer que l'élément de données correspondant est unique dans les données condensées à source unique ; et (2) une seconde valeur binaire pour indiquer que l'élément de données correspondant n'est pas unique dans les données condensées à source unique.

3. Procédé selon la revendication 1, dans lequel le stockage comprend le stockage du résultat dans un registre de masque d'opération de données condensées (1009).

4. Procédé selon la revendication 1, comprenant en outre l'exécution d'une opération masquée des données condensées (535) sur un sous-ensemble des éléments de données faisant partie des données condensées à source unique, dans lequel le sous-ensemble comprend tous les éléments de données faisant partie des données condensées à source unique qui sont indiqués comme étant uniques dans le résultat.

5. Procédé selon la revendication 4, dans lequel l'exécution de l'opération masquée de données condensées comprend soit l'utilisation du résultat en tant que masque d'opération des données condensées soit l'utilisation d'un masque d'opération de données condensées dérivé du résultat.

6. Procédé selon la revendication 1, dans lequel le stockage comprend le stockage d'un résultat qui n'indique pas lesquels des éléments de données sont égaux à chacun des éléments de données non uniques.

7. Procédé selon la revendication 1, dans lequel la réception comprend la réception de l'instruction indiquant les données condensées à source unique ayant au moins seize éléments de données condensées (842-1), et dans lequel le stockage comprend le stockage du résultat indiquant lequel des seize éléments de données est unique dans les données condensées à source unique.

8. Processeur (100, 200) comprenant :
un registre de données condensées (212) ; et
une unité d'exécution (210) couplée au registre de données condensées, l'unité d'exécution pouvant exécuter, en réponse au décodage d'une instruction d'identification d'élément de données condensées unique à source unique (204), l'instruction d'identification d'élément de données condensées unique à source unique pour indiquer le registre de données condensées qui est adapté pour avoir des données condensées de la source (213) comprenant une pluralité d'éléments de données condensées, et pour indiquer un emplacement de stockage de destination (216), pour stocker un résultat d'identification d'élément de données condensées unique (217) dans l'emplacement de stockage de destination, le résultat de l'identification de l'élément de données condensées unique pour indiquer lesquels de la pluralité des éléments de données condensées sont uniques dans les données condensées de la source, dans lequel l'unité d'exécution, en réponse au décodage de l'instruction, doit stocker un seul bit dans le résultat (417B) pour chaque élément de données correspondant des données condensées de la source (413B).

9. Processeur selon la revendication 8, dans lequel chaque bit unique a une des valeurs suivantes : (1) une première valeur binaire pour indiquer que l'élément de données correspondant est unique dans les données condensées de la source ; et (2) une seconde valeur binaire pour indiquer que l'élément de données correspondant n'est pas unique dans les données condensées de la source.

10. Processeur selon la revendication 8, dans lequel l'unité d'exécution, en réponse à l'instruction, doit stocker le résultat dans un registre de masque d'opération de données condensées (1009).

11. Processeur selon la revendication 8, comprenant en outre la logique pour exécuter une opération masquée des données condensées (535) sur un sous-ensemble des éléments de données faisant partie des données condensées de la source, dans lequel le sous-ensemble doit comprendre tous les éléments de données faisant partie des données condensées de la source qui sont indiqués comme étant uniques dans le résultat.

12. Processeur selon la revendication 11, dans lequel la logique d'exécution de l'opération masquée de données condensées doit utiliser soit (a) le résultat en tant que masque d'opération des données condensées soit (b) un masque d'opération de données condensées dérivé du résultat.

13. Processeur (100) comprenant :
un premier registre de données condensées (208) ;
un second registre de données condensées (208) ; et
une unité d'exécution (210) couplée aux premier et second registres de données condensées, l'unité d'exécution recevant une instruction d'identification des éléments de données mutuellement condensés uniques à deux sources (106), l'instruction pour indiquer le premier registre de données condensées, le second registre de données condensées, et un emplacement de stockage de destination, le premier registre de données condensées à avoir des données condensées de la première source (739A) comprenant une première pluralité d'éléments de données condensées, le second registre de données condensées à avoir des données condensées de la seconde source (740A) comprenant une seconde pluralité d'éléments de données condensées, l'unité d'exécution pouvant fonctionner, en réponse à l'instruction, pour stocker un résultat d'identification d'élément de données condensées unique (741A) dans l'emplacement de stockage de destination, le résultat de l'identification de l'élément de données condensées unique indiquant lequel de la première pluralité d'éléments de données condensées des données condensées de la première source est unique dans la seconde pluralité des éléments de données condensées des données condensées de la seconde source, dans lequel l'unité d'exécution doit stocker un seul bit dans le résultat d'identification d'élément de données condensées unique pour chaque élément de données correspondant des données condensées de la première source, et dans lequel chaque bit unique doit avoir soit une première valeur binaire pour indiquer que l'élément de données correspondant des données condensées de la première source est unique dans les données condensées de la seconde source, soit une seconde valeur binaire pour indiquer que l'élément de données correspondant de la première source de données condensées n'est pas unique dans les données condensées de la seconde source.

14. Support de stockage non transitoire lisible par une machine (1245) qui stocke une instruction (1204) laquelle, si elle est exécutée par une machine comprenant un processeur selon l'une quelconque des revendications 8 à 13, est utilisable pour amener la machine à exécuter le procédé de l'une quelconque des revendications 1 à 7.
